# EUROPEAN PATENT APPLICATION

(11) **EP 2 657 897 A1**
(43) Date of publication of application: **30.10.2013**
(21) Application number: 12780625.5
(22) Date of filing: 10.04.2012
(51) Int. Cl.: G06Q 20/24

(54) **INFORMATION PROCESSING DEVICE, INFORMATION PROCESSING METHOD, INFORMATION PROCESSING PROGRAM, AND RECORDING MEDIUM**

(30) Priority: 29.02.2012 JP 2012043966
(71) Applicant: Rakuten, Inc., Tokyo 140-0002 (JP)
(72) Inventor: YAMADA, Yoshihisa, Shinagawa-ku Tokyo 140-0002 (JP); OKATAKE, Masashi, Shinagawa-ku Tokyo 140-0002 (JP); TAKANO, Yoshiyuki, Shinagawa-ku Tokyo 140-0002 (JP); SAITO, Katsuya, Shinagawa-ku Tokyo 140-0002 (JP); TANAKA, Kaoru, Shinagawa-ku Tokyo 140-0002 (JP); NANJO, Kaori, Shinagawa-ku Tokyo 140-0002 (JP); ENDO, Shizuka, Shinagawa-ku Tokyo 140-0002 (JP); OKUNO, Tatsuko, Shinagawa-ku Tokyo 140-0002 (JP)
(74) Representative: HOFFMANN EITLE
(86) International application number: PCT/JP2012/059790
(87) International publication number: WO 2013/128655

(57) **Abstract**

A reservation, where the number of days from a date of reservation to a date of use exceeds the number of days that correspond to a credit period, is accepted as a reservation where settlement by a credit card is designated while maintaining the safety of settlement of usage fee. When a reservation where the number of days from today to a date of use exceeds the number of days of a credit period is requested, an information processing apparatus checks validity of the designated credit card. At this time, if the designated credit card can be confirmed to be valid, the information processing apparatus accepts the reservation and stores information of the designated credit card in a storage means. The information processing apparatus checks the validity of the designated credit card on or after a date on which the number of days from the date to a date of use of a service whose reservation is accepted is the number of the credit days on the basis of the information stored in the storage means. At this time, if the credit card cannot be confirmed to be valid, the information processing apparatus outputs information indicating that a settlement method is changed to a method different from a settlement method performed by using the designated credit card.

## Description

### Technical Field

The present invention relates to a technical field of information processing apparatus and information processing method for performing a process to settle a usage fee of a reserved service by credit card.

### Background Art

Conventionally, a reservation system which accepts a reservation of use of a service such as, for example, an accommodation reservation of an accommodation facility, on the Internet is known. Among such reservation systems, there is a system in which online card settlement is available. If a user designates the online card settlement as a settlement method when making a reservation, the reservation system automatically performs a settlement process of a usage fee by a credit card on or after the date of use of the reserved service. In this case, the user needs not to perform procedure of settlement when using the service.

When the online card settlement is designated as a settlement method, the reservation system checks validity of the credit card when the reservation is made. At this time, if the validity of the credit card is confirmed, a reservation amount corresponding to the usage fee is secured. The period in which the secured reservation amount is valid is defined as a credit period in advance. If the date of use of the service comes after the credit period expires, it may not be possible to secure the safety of the settlement of the usage fee by the online card settlement. Therefore, in the reservation system, up to how many days before the date of use of the service the online card settlement can be used to reserve the service is defined. For example, Non Patent Literature 1 describes a technique in which a user can use the online card settlement only for a reservation where the check-in date is within 90 days from the reservation date in a reservation of an accommodation facility.

### Citation List

### Non-Patent Literature

Non-Patent Literature 1: Recruit Co., Ltd. "What is online card settlement?", [online], [searched on January 17, 2012], Internet <URL: http://www.jalan.net/jalan/doc/howto/cardkessai.html>

### Summary of Invention

### Technical Problem

As described above, in the conventional technique, when a user uses the online card settlement, it is not possible to accept a reservation where the number of days from a date of reservation to a date of use exceeds the number of days that correspond to a credit period.

The present invention is made in view of the above problem, and an object of the present invention is to provide an information processing apparatus, an information processing method, an information processing program, and a recording medium, which can accept a reservation, where the number of days from a date of reservation to a date of use exceeds the number of days that correspond to a credit period, as a reservation where settlement by a credit card is designated, while maintaining the safety of settlement of the usage fee.

### Solution to Problem

In order to achieve the above object, the invention according to claim 1 relates to an information processing apparatus, comprising:
a first check means that checks validity of a designated credit card when a reservation where the number of days to a date of use of a service exceeds the number of credit days which correspond to a period where credit of settlement using the credit card is given is requested as a reservation where a usage fee is settled by the credit card on or after the date of use of the service;
a reservation means that, when the designated credit card can be confirmed to be valid by the first check means, accepts the reservation and stores information of the designated credit card in a storage means;
a second check means that checks the validity of the designated credit card, on the basis of the information stored in the storage means, on or after a date on which the number of days to the date of use of the service whose reservation is accepted by the reservation means is the number of the credit days; and
an output means that, when the designated credit card cannot be confirmed to be valid by the second check means, outputs information indicating that a settlement method is changed to a method different from a settlement method using the designated credit card.

According to the present invention, even when the number of days from the reservation date to the date of use exceeds the number of days that correspond to the credit period, the information processing apparatus can confirm that the designated credit card is valid and accept the reservation. Further, if the designated credit card becomes invalid after the reservation, the settlement method is changed, so that it is possible to maintain the reservation while keeping the safety of the settlement of the usage fee.

The invention according to claim 2 relates to the information processing apparatus according to claim 1, further comprising:
a third check means that checks the validity of the designated credit card on the basis of the information stored in the storage means after the designated credit card cannot be confirmed to be valid by the second check means,
wherein when the designated credit card can be confirmed to be valid by the third check means, the output means outputs information indicating that the settlement method is a method in which settlement is performed by the designated credit card.

According to the present invention, even in a case in which the credit to settle the usage fee by the credit card which the user wants to use is lost once after the reservation, if the credit is restored thereafter, it is possible to use the settlement method that uses the credit card which the user wants to use.

The invention according to claim 3 relates to the information processing apparatus according to claim 2, further comprising:
a settlement means that, when a fee is incurred by use of other than a reserved service from the usage fee that can be confirmed to be valid by the third check means, performs settlement of the usage fee including the fee that is incurred by the designated credit card on the basis of the information stored in the storage means.

According to the present invention, if a new fee occurs when the user uses the service, the user can perform settlement by the credit card which the user wants to use without performing a procedure of the settlement.

The invention according to claim 4 relates to the information processing apparatus according to claim 2 or 3, further comprising:
a fourth check means that, when the number of days of use of the service whose reservation is accepted by the reservation means is greater than or equal to the number of the credit days, after the designated credit card can be confirmed to be valid by the third check means, checks the validity of the designated credit card on the basis of the information stored in the storage means by the day before a date on which use of the service whose reservation is accepted is started,
wherein, when the designated credit card cannot be confirmed to be valid by the fourth check means, the output means outputs information indicating that the settlement method is changed to a method different from the settlement method using the designated credit card.

According to the present invention, for a reservation where, when the validity of the credit card is checked so that the settlement is performed within the credit period, the check date is on or after the date on which the use is started, it is possible to check the validity of the credit card before the date on which the use is started. Therefore, the provider of the service can start providing the service while it is secured that the user can settle the usage fee by the credit card. Further, it is possible to increase the number of days of use of the service included in the credit period by the check of validity performed by the fourth check means.

The invention according to claim 5 relates to the information processing apparatus according to claim 4, further comprising:
a fifth check means that, after the designated credit card can be confirmed to be valid by the fourth check means, checks the validity of the designated credit card on the basis of the information stored in the storage means on or after a date on which the number of days to a settlement date of the usage fee is smaller than or equal to the number of the credit days,
wherein, when the designated credit card cannot be confirmed to be valid by the fifth check means, the output means outputs information indicating that the settlement method is changed to a method different from the settlement method using the designated credit card.

According to the present invention, the validity of the credit card is checked before the date on which the use of the service is started, and thereafter, the validity of the credit card is further checked so that the settlement is performed within the credit period. At this time, if the validity cannot be confirmed, the settlement method can be changed. Therefore, it is possible to improve the safety of the settlement of the usage fee of the service.

The invention according to claim 6 relates to the information processing apparatus according to any one of claims 2 to 5, further comprising:
a determination means that determines, when the designated credit card cannot be confirmed to be valid by the second check means, whether or not a reason why the designated credit card cannot be confirmed to be valid is because the usage fee exceeds available credit of the designated credit card,
wherein, when the determination means determines that the reason is because the usage fee exceeds available credit of the designated credit card, the third check means checks validity of the designated credit card.

According to the present invention, when the reason why the credit card cannot be confirmed to be valid by a second check means is because the usage fee of the reserved service exceeds the available credit of the credit card, the validity of the credit card is checked once again. There is probability that the available credit of the credit card increases from when the validity is checked by the second check means. Therefore, the information processing apparatus can accept only a reservation where the probability that the validity can be confirmed is high. Thereby, it is possible to prevent the information processing apparatus from unnecessarily re-checking the validity of the credit card.

The invention according to claim 7 relates to the information processing apparatus according to any one of claims 2 to 6, further comprising:
a storage control means that stores a validity check date of the second check means and a validity check date of the third check means in a check date storage means; and
an estimation means that estimates a date on which the designated credit card becomes valid on the basis of the check dates stored in the check date storage means,
wherein the third check means checks validity of the designated credit card on a date estimated by the estimation means.

According to the present invention, the validity is checked on a date on which the designated credit card is estimated to be valid, so that it is possible to increase the probability that the credit for settling the usage fee is restored and thereby the credit card can be confirmed to be valid.

The invention according to claim 8 relates to an information processing method executed by a computer, the information processing method comprising:
a first check step of checking validity of a designated credit card when a reservation where the number of days to a date of use of a service exceeds the number of credit days which correspond to a period where credit of settlement using the credit card is given is requested as a reservation where a usage fee is settled by the credit card on or after the date of use of the service;
a reservation step of, when the designated credit card can be confirmed to be valid in the first check step, accepting the reservation and storing information of the designated credit card in a storage means;
a second check step of checking the validity of the designated credit card, on the basis of the information stored in the storage means, on or after a date on which the number of days to the date of use of the service whose reservation is accepted in the reservation step is the number of the credit days; and
an output step of, when the designated credit card cannot be confirmed to be valid in the second check step, outputting information indicating that a settlement method is changed to a method different from a settlement method using the designated credit card.

The invention according to claim 9 relates to an information processing program that causes a computer to function as:
a first check means that checks validity of a designated credit card when a reservation where the number of days to a date of use of a service exceeds the number of credit days which correspond to a period where credit of settlement using the credit card is given is requested as a reservation where a usage fee is settled by the credit card on or after the date of use of the service;
a reservation means that, when the designated credit card can be confirmed to be valid by the first check means, accepts the reservation and stores information of the designated credit card in a storage means;
a second check means that checks the validity of the designated credit card, on the basis of the information stored in the storage means, on or after a date on which the number of days to the date of use of the service whose reservation is accepted by the reservation means is the number of the credit days; and
an output means that, when the designated credit card cannot be confirmed to be valid by the second check means, outputs information indicating that a settlement method is changed to a method different from a settlement method using the designated credit card.

The invention according to claim 10 relates to a recording medium that computer-readably stores an information processing program that causes a computer to function as:
a first check means that checks validity of a designated credit card when a reservation where the number of days to a date of use of a service exceeds the number of credit days which correspond to a period where credit of settlement using the credit card is given is requested as a reservation where a usage fee is settled by the credit card on or after the date of use of the service;
a reservation means that, when the designated credit card can be confirmed to be valid by the first check means, accepts the reservation and stores information of the designated credit card in a storage means;
a second check means that checks the validity of the designated credit card, on the basis of the information stored in the storage means, on or after a date on which the number of days to the date of use of the service whose reservation is accepted by the reservation means is the number of the credit days; and
an output means that, when the designated credit card cannot be confirmed to be valid by the second check means, outputs information indicating that a settlement method is changed to a method different from a settlement method using the designated credit card.

### Advantageous Effects of Invention

According to the present invention, even when the number of days from the reservation date to the date of use exceeds the number of days that correspond to the credit period, the information processing apparatus can confirm that the designated credit card is valid and accept the reservation. Further, if the designated credit card becomes invalid after the reservation, the settlement method is changed, so that it is possible to maintain the reservation while keeping the safety of the settlement of the usage fee.

### Brief Description of Drawings

Fig. 1 is a diagram showing an example of a schematic configuration of an information processing system S according to an embodiment.
Fig. 2 is a diagram showing a flow from reservation to settlement.
Fig. 3 is a diagram showing a flow from reservation to settlement in a case in which the number of days in which an accommodation facility is used is greater than or equal to the number of days of credit period.
Fig. 4 is a diagram showing a flow from reservation to settlement in a case in which the number of days in which an accommodation facility is used is greater than or equal to the number of days of credit period.
Fig. 5 is a block diagram showing an example of a schematic configuration of an accommodation facility reservation server 1 according to an embodiment.
Fig. 6A is a diagram showing an example of information registered in a member information DB 12a. Fig. 6B is a diagram showing an example of information registered in an accommodation facility information DB 12b. Fig. 6C is a diagram showing an example of information registered in a reservation information DB 12c. Fig. 6D is a diagram showing an example of information registered in a credit re-check history DB 12d.
Fig. 7 is a flowchart showing a process example of a reservation process of a system control unit 14 in the accommodation facility reservation server 1 according to an embodiment.
Fig. 8 is a flowchart showing a process example of a credit re-check process of the system control unit 14 in the accommodation facility reservation server 1 according to an embodiment.
Fig. 9 is a flowchart showing a process example of the credit re-check process of the system control unit 14 in the accommodation facility reservation server 1 according to an embodiment.
Fig. 10 is a flowchart showing a process example of a settlement method change process of the system control unit 14 in the accommodation facility reservation server 1 according to an embodiment.
Fig. 11 is a flowchart showing a process example of an optional fee registration process of the system control unit 14 in the accommodation facility reservation server 1 according to an embodiment.
Fig. 12 is a flowchart showing a process example of a settlement process of the system control unit 14 in the accommodation facility reservation server 1 according to an embodiment.

### Description of Embodiment

Hereinafter, an embodiment of the present invention will be described in detail with reference to the drawings. The embodiment described below is an embodiment in which the present invention is applied to an information processing system.

### [1. Configuration and function outline of information processing system]

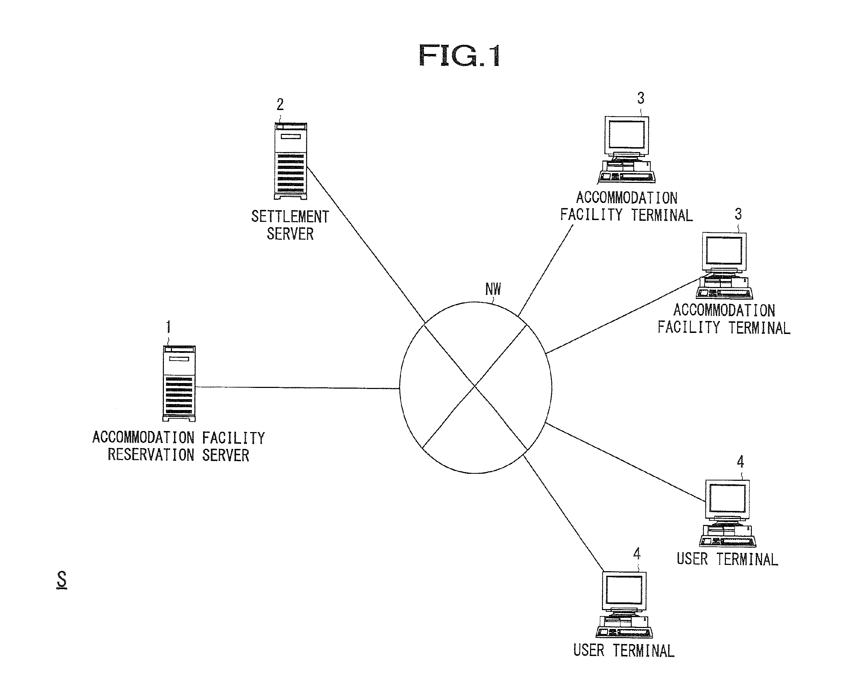

First, a configuration and a function outline of an information processing system S according to the present embodiment will be described with reference to Fig. 1. Fig. 1 is a diagram showing an example of a schematic configuration of the information processing system S according to the present embodiment.

As shown in Fig. 1, the information processing system S includes an accommodation facility reservation server 1, a settlement server 2, a plurality of accommodation facility terminals 3, and a plurality of user terminals 4. The accommodation facility reservation server 1, the settlement server 2, and the accommodation facility terminals 3, and the user terminals 4 can transmit and receive data to and from each other via a network NW using, for example, TCP/IP as a communication protocol. The network NW is constructed by, for example, the Internet, a dedicated communication line (for example, CATV (Community Antenna Television) line), a mobile communication network (including a base station), a gate way, and the like.

The accommodation facility reservation server 1 is a server apparatus that performs various processes related to an accommodation facility reservation site. The accommodation facility reservation server 1 is an example of an information processing apparatus of the present invention. The accommodation facility reservation site is a Web site that receives a reservation of accommodation in an accommodation facility. The accommodation facility reservation site is entrusted by a plurality of accommodation facilities to receive reservations. For example, the accommodation facility reservation server 1 transmits a Web page of an accommodation facility reservation site and performs processing related to search for an accommodation facility and reservation of accommodation according to a request from the user terminal 4. For example, the accommodation facility reservation server 1 transmits a request to the settlement server 2, so that the accommodation facility reservation server 1 checks validity of a credit card and performs a process to settle an accommodation fee of an accommodation facility.

The settlement server 2 is a server apparatus that performs various processes related to settlement by credit card. For example, the settlement server 2 determines approval or disapproval of credit of a credit card and performs a process of settlement on the basis of a request from the accommodation facility reservation server 1. Although Fig. 1 shows only one settlement server 2, for example, the settlement server 2 is provided for each credit card company that issues credit cards available for an accommodation reservation site.

The accommodation facility terminal 3 is a terminal apparatus used by a provider of an accommodation facility that entrusts the accommodation facility reservation site to receive reservation. The accommodation facility terminal 3 accesses a server apparatus such as the accommodation facility reservation server 1 on the basis of an operation from the provider. Thereby, the accommodation facility terminal 3 receives a Web page from the server apparatus and displays the Web page. Software such as a browser and an e-mail client is installed in the accommodation facility terminal 3. For example, the provider uses the accommodation facility terminal 3, so that the provider registers information of the accommodation facility in an accommodation facility reservation site and checks reservation status of the accommodation facility.

The user terminal 4 is a terminal apparatus of a user who uses an accommodation facility reservation site. The user terminal 4 accesses the accommodation facility reservation server 1 on the basis of an operation from the user, so that the user terminal 4 receives a Web page from the accommodation facility reservation server 1 and displays the Web page. Software such as a browser and an e-mail client is installed in the user terminal 4. As the user terminal 4, for example, a personal computer, a portable information terminal such as a PDA (Personal Digital Assistant) and a smart phone, and a mobile phone are used.

### [2. Reservation by online card settlement]

When a user reserves a use of an accommodation facility on an accommodation facility reservation site, the user can specify a settlement method of the accommodation facility. As the settlement method, there are on-site settlement and online card settlement. In the on-site settlement, when the user checks in the accommodation facility or checks out from the accommodation facility, the user performs settlement at the accommodation facility. At this time, the user can select, for example, cash settlement, credit card settlement, and the like. In the online card settlement, the accommodation facility reservation server 1 performs settlement of the accommodation fee by using a credit card designated by the user. In the present embodiment, the settlement date of the online card settlement is the following day of the day of check-out. For example, the accommodation fee settled by the online card settlement is transferred to a bank account of the accommodation facility from the accommodation facility reservation site. If the user specifies the online card settlement, the user does not need to perform a process of settlement at the accommodation facility when the user uses the accommodation facility. The settlement day of the online card settlement is not limited to the following day of the day of check-out. The settlement day of the online card settlement may be any day on or after the day of check-in. Any day on or after the date of check-in includes the day of check-in and days after the day of check-in.

When the user specifies the online card settlement and requests reservation, the accommodation facility reservation server 1 checks validity of a credit card designated by the user. The reason to do this is to determine whether or not the user has the capacity to settle the accommodation fee by the designated credit card. And, the reason is to secure a credit frame corresponding to the accommodation fee. The confirmation of the validity of the credit card includes a check whether or not information of the credit card designated by the user corresponds to information of a duly issued credit card, a check whether or not the validity period of the credit card expires, and a check whether or not the currently available credit of the credit card is greater than the accommodation fee. The available credit of the credit card is a value obtained by subtracting a value corresponding to a currently secured credit frame from the credit limit amount of the credit card. The process for confirming the validity of the credit card is called an "authori-process". The "authori" is an abbreviation of authorization. In the present embodiment, confirming the validity of the credit card is referred to as confirming the credit of the credit card. When the credit can be confirmed, the credit for settling the usage fee by the designated credit card is given. In other words, it is guaranteed that an amount of money corresponding to the credit frame can be settled. However, the confirmed credit is valid only for a predetermined period and when the predetermine period expires, the credit becomes invalid. This period is the credit period. The credit period is a period in which credit for settlement by the credit card is given. When the credit period expires, the secured credit frame is lost. The number of days of the credit period is determined in advance. For example, in the present embodiment, the number of days of the credit period is 30. However, the number of days of the credit period may be other than 30. The number of days of the credit period is an example of the number of credit days of the present invention.

The date on which the user makes a reservation of the accommodation facility is referred to as a reservation date. If the number of days from the reservation date to the settlement date that is the following day of the day of the check-out is smaller than or equal to the number of days of the credit period, the accommodation facility reservation server 1 can perform settlement of the accommodation fee on the settlement date on the basis of the credit frame secured when the reservation is made. On the other hand, if the number of days from the reservation date to the settlement date is greater than the number of days of the credit period, the credit frame is lost before the settlement date. Then, there may be a case in which the accommodation fee cannot be settled by the credit card on the settlement date.

Even when the number of days from the reservation date to the settlement date is greater than the number of days of the credit period, if the number of days from the reservation date to the check-in date is smaller than or equal to the number of days of the credit period, it is possible to maintain the safety of the settlement of the accommodation fee to some extent. The reason is because the user starts the use of the accommodation facility on the check-in date in a state in which the credit of the credit card designated by the user is confirmed. For example, if the capacity of settlement by the credit card is lost while the user stays in the accommodation facility, the provider of the accommodation facility may directly request the user who stays in the accommodation facility to perform settlement of the accommodation fee. Further, there may be a case in which the user cancels the reservation or the user does not show at the accommodation facility on the check-in date without any notice. In this case, for example, the accommodation facility reservation server 1 may perform settlement of a cancellation fee in the credit period within the secured credit frame on the basis of a request from the provider of the accommodation facility.

To maintain the safety of the settlement of the accommodation fee, when the number of days from the reservation date to the check-in date (or the settlement date) is greater than the number of days of the credit period, it is conceivable that the accommodation facility reservation server 1 performs control so that the user cannot use the online card settlement. However, there is the case in which the user wants to make a reservation many days before the date when the user uses the accommodation facility. In this case, if the online card settlement cannot be used, it is inconvenient for the user. Further, the user may give up making a reservation on the accommodation facility reservation site. Then, the provider of the accommodation facility loses a chance to provide the accommodation facility because the reservation is not made.

In the information processing system S, when a user designates the online card settlement and a reservation is made where the number of days from the reservation date to the check-in date is greater than the number of days of the credit period, the accommodation facility reservation server 1 performs credit check at that point, and if the credit can be confirmed, the accommodation facility reservation server 1 accepts the reservation. At this time, the accommodation facility reservation server 1 stores information of the credit card designated by the user. Thereafter, the accommodation facility reservation server 1 performs the credit check again on the basis of the stored information of the credit card on a day on or after the day when the number of days from the day to the check-in date becomes the number of days of the credit period. The second and the following credit checks are referred to as "credit re-check". The credit re-check for the first time is referred to as "first credit re-check". If the accommodation facility reservation server 1 cannot confirm the credit at the first credit re-check, the accommodation facility reservation server 1 outputs information indicating that the settlement method will be changed.

By the process described above, the accommodation facility reservation server 1 can accept a reservation where the number of days from the reservation date to the check-in date is greater than the number of days of the credit period as a reservation where the online card settlement is designated while improving the safety of the settlement of the accommodation fee. Specifically, the accommodation facility reservation server 1 checks the credit when a reservation is made, so that the accommodation facility reservation server 1 can check the validity of the credit card and the capacity of settlement of the user at that point. If the accommodation facility reservation server 1 can confirm the credit at the first credit re-check, the user starts the use of the accommodation facility on the check-in date in a state in which the credit of the credit card designated by the user is confirmed. Therefore, it is possible to improve the safety of the settlement of the accommodation fee. On the other hand, if the accommodation facility reservation server 1 cannot confirm the credit at the first credit re-check, the accommodation facility reservation server 1 can change the settlement method to a method different from the settlement method by the credit card designated when the reservation is made. For the user, there is an advantage that the user does not need to specify the information of the credit card desired to be used for the settlement.

In the present embodiment, the accommodation facility reservation server 1 extends the range of reservation which is accepted and on which the first credit re-check is performed to a range of reservation where the number of days from the reservation date to the settlement date is greater than the number of days of the credit period. The accommodation facility reservation server 1 performs the first credit re-check on a day on or after the day when the number of days from the day to the settlement date becomes the number of days of the credit period. In other words, the accommodation facility reservation server 1 performs processing on the basis of the settlement date instead of the check-in date. Thereby, it is possible to further improve the safety of the settlement of the accommodation fee. The reason is because, when the credit can be confirmed by the first credit re-check, the accommodation facility reservation server 1 can perform settlement of the accommodation fee on the settlement date on the basis of the credit frame secured at this time.

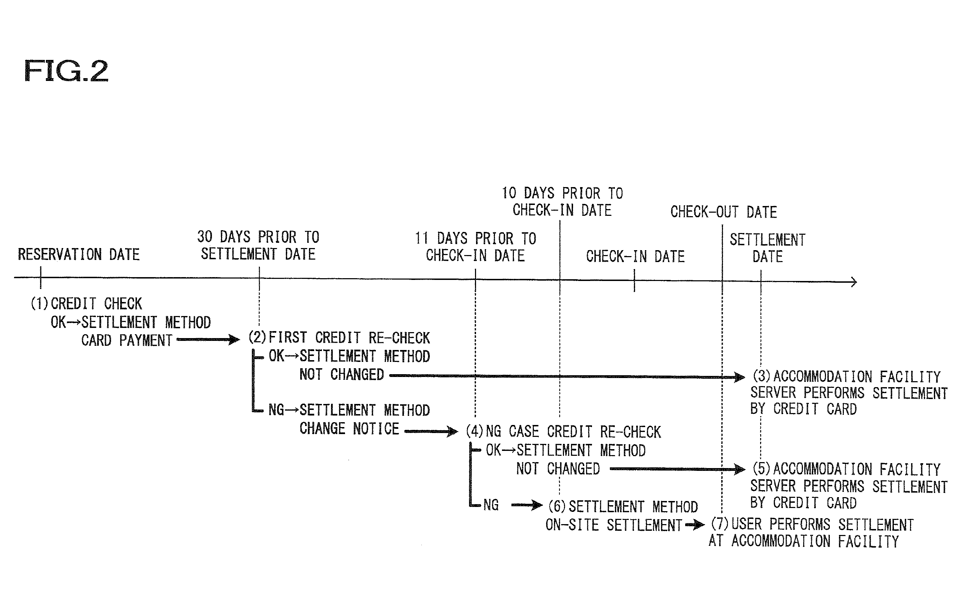

Hereinafter, an outline of the process from the reservation to the settlement will be described. Fig. 2 is a diagram showing a flow from the reservation to the settlement. Fig. 2 shows an example of a case in which the number of days of the credit period is 30. In Fig. 2, "OK" indicates a case in which the credit is confirmed and "NG" indicates a case in which the credit is not confirmed.

As shown in Fig. 2, a user specifies the check-in date and the check-out date. As a result, it is assumed that the settlement date is at least 30 days later than today's date. The user designates the online card settlement and performs an operation to make a reservation. Then, the accommodation facility reservation server 1 performs the credit check of the designated credit card (Fig. 2 (1)). At this time, if the accommodation facility reservation server 1 cannot confirm the credit, the accommodation facility reservation server 1 performs control to cause the user to change the settlement method. On the other hand, if the accommodation facility reservation server 1 can confirm the credit, the accommodation facility reservation server 1 accepts the reservation whose settlement method is the online card settlement.

Thereafter, on the date 30 days prior to the settlement date, the accommodation facility reservation server 1 performs the first credit re-check of the credit card designated when the reservation is made (Fig. 2 (2)). The date of the first credit re-check is not limited to the date the number of days of the credit period prior to the settlement date. The accommodation facility reservation server 1 may perform the credit re-check on any day on or after the date the number of days of the credit period prior to the settlement date. When the check-in date is used as a reference date, the accommodation facility reservation server 1 may perform the first credit re-check on any day on or after the date the number of days of the credit period prior to the check-in date. In both cases, from the viewpoint of the safety of the settlement of the accommodation fee, the accommodation facility reservation server 1 may perform the first credit re-check by the previous day of the check-in date.

When the accommodation facility reservation server 1 can confirm the credit at the first credit re-check, the accommodation facility reservation server 1 does not change the settlement method. Then, after the user stays in the accommodation facility, the accommodation facility reservation server 1 performs settlement of the accommodation fee on the following day of the check-out date by the credit card designated when the reservation is made (Fig. 2 (3)). When the check-in date is used as the reference date, the credit period may expire before the settlement date. Specifically, if the first credit re-check is performed from the date 30 days prior to the check-in date to the day before the date 30 days prior to the settlement date, the settlement date is not included in the credit period. In this case, for example, the accommodation facility reservation server 1 performs the credit check on a day on or after the date 30 days prior to the settlement date and makes the settlement in a state in which the credit can be confirmed.

On the other hand, when the accommodation facility reservation server 1 cannot confirm the credit at the first credit re-check, although the accommodation facility reservation server 1 does not change the settlement method at this point, the accommodation facility reservation server 1 outputs information indicating that the settlement method will be changed. The reason is to provide a chance for the user to voluntarily change the settlement method. The accommodation facility reservation server 1 transmits settlement method change notice e-mail to the user who made the reservation as the information indicating that the settlement method will be changed. The settlement method change notice e-mail is e-mail which notices that the settlement method will be changed from the online card settlement to the on-site settlement. For example, the user who receives the settlement method change notice e-mail via the user terminal 4 can change the credit card used for the online card settlement to a credit card different from the credit card designated when the reservation is made. Thereby, the user can leave the settlement method as it is as the online card settlement. When the user requests the accommodation facility reservation server 1 to change the credit card, the accommodation facility reservation server 1 checks the credit by the newly designated credit card. When the accommodation facility reservation server 1 can confirm the credit, the accommodation facility reservation server 1 accepts the change of the credit card.

If the accommodation facility reservation server 1 cannot confirm the credit at the first credit re-check and the credit card is not changed, the accommodation facility reservation server 1 further checks the credit by the credit card designated when the reservation is made on the 11th day prior to the check-in date (Fig. 2 (4)). The credit re-check after the credit cannot be confirmed at the first credit re-check is referred to as "NG case credit re-check". The reason why the accommodation facility reservation server 1 performs the NG case credit re-check is because, even if the credit for settling the accommodation fee by the credit card is lost at the time point of the first credit re-check, the credit may recover thereafter. For example, once a month, there is a day when the credit frame where settlement processing is performed in the past one month is cleared. The date when the credit frame is cleared is referred to as "credit frame clear date". In practice, for example, at a timing at which the day before the credit frame clear date turns to the credit frame clear date, the credit frame is cleared. When the credit frame is cleared, the available credit of the credit card increases on the credit frame clear date. The credit frame clear date is defined, for example, for each credit card company. For example, the credit frame clear date is the first day of a month. For example, the credit frame clear date is a withdrawal day. The withdrawal day is a day when an amount of money settled by the credit card is withdrawn from the bank account of the user. The credit frame may be cleared even if it is not the credit frame clear date. For example, the credit frame is cleared when a transaction corresponding to the secured credit frame is cancelled.

The 11th day prior to the check-in date is a default date on which the NG case credit re-check is performed. The accommodation facility reservation server 1 estimates a date on which there is high probability that the credit for settling the accommodation fee is restored. This date is referred to as "credit restoration date." The credit restoration date may be the credit frame clear date. The accommodation facility reservation server 1 performs the NG case credit re-check on the estimated credit restoration date. Specifically, the accommodation facility reservation server 1 records a date on which the credit cannot be confirmed at the first credit re-check and a date on which the credit can be confirmed at the NG case credit re-check as a history. There is a day on which the credit for settling the accommodation fee is restored from a day after the date of the first credit re-check to a day of the NG case credit re-check. Therefore, the accommodation facility reservation server 1 estimates the credit restoration date from the days included in the above period. For example, the accommodation facility reservation server 1 may estimate the mean date between the date of the first credit re-check and the date of the NG case credit re-check as the credit restoration date. The accommodation facility reservation server 1 estimates a date on which there is high probability that the credit for settling the accommodation fee is restored and performs the NG case credit re-check on the estimated date, so that the accommodation facility reservation server 1 can increase the probability to be able to confirm the credit. When a credit card company does not publicize the credit frame clear date, estimating a date on which there is high probability that the credit for settling the accommodation fee is restored is effective.

When the credit can be confirmed at the NG case credit re-check, the accommodation facility reservation server 1 does not change the settlement method. The accommodation facility reservation server 1 outputs information indicating that the settlement method of the online card settlement by the credit card designated when the reservation is made is maintained. As the above information, the accommodation facility reservation server 1 transmits, for example, online card settlement notice e-mail to the user who made the reservation. The online card settlement notice e-mail is e-mail which notices that the settlement method is not changed from the online card settlement to the on-site settlement. Then, the accommodation facility reservation server 1 performs settlement of the accommodation fee on the following day of the check-out date by the credit card designated when the reservation is made (Fig. 2 (5)).

On the other hand, if the accommodation facility reservation server 1 cannot confirm the credit at the NG case credit re-check, when the user does not voluntarily change the settlement method by the date 11th day prior to the check-in date, the accommodation facility reservation server 1 changes the settlement method to the on-site settlement on the date 10 days prior to the check-in date (Fig. 2 (6)). If the credit cannot be confirmed even just before the check-in, the provider of the accommodation facility may feel anxiety about user's capacity of settlement of the accommodation fee. In order not to cause the provider to have such a anxiety, the accommodation facility reservation server 1 changes the settlement method from the online card settlement to the on-site settlement on a day a predetermined number of days prior to the check-in date. The accommodation facility reservation server 1 outputs information indicating that the settlement method is changed. As the above information, the accommodation facility reservation server 1 transmits, for example, on-site settlement notice e-mail to the user who made the reservation. The on-site settlement notice e-mail is e-mail which notices that the settlement method is changed from the online card settlement to the on-site settlement. Thereafter, when the user stays in the accommodation facility and checks out from the accommodation facility, the user performs settlement of the accommodation fee at the accommodation facility (Fig. 2 (7)). For example, the user who receives the on-site settlement notice e-mail via the user terminal 4 can change the settlement method to the online card settlement by designating a credit card different from the credit card designated when the reservation is made.

The accommodation facility reservation server 1 transmits e-mail in which reservation information is described to the user who made the reservation of the accommodation facility on the previous day of the check-in date. Therefore, the accommodation facility reservation server 1 may describe the fixed settlement method in the e-mail in which reservation information is described instead of transmitting the online card settlement notice e-mail or the on-site settlement notice e-mail.

The date on which the settlement method is changed to the on-site settlement may be a date other than the date 10 days prior to the check-in date. When the credit cannot be confirmed at the first credit re-check, the accommodation facility reservation server 1 may change the settlement method to the on-site settlement at that point. When the credit can be confirmed at the NG case credit re-check, the accommodation facility reservation server 1 may change the settlement method to the online card settlement.

The accommodation facility reservation server 1 may perform the NG case credit re-check on a day a predetermined number of days prior to the check-in date without estimating the credit restoration date. The default date of the NG case credit re-check is not limited to the date 11 days prior to the check-in date. For example, the accommodation facility reservation server 1 may perform the NG case credit re-check on the credit frame clear date. From the viewpoint of the safety of the settlement of the accommodation fee, the accommodation facility reservation server 1 may perform the NG case credit re-check by the day prior to the check-in date. Or, the accommodation facility reservation server 1 needs not to perform the NG case credit re-check.

By the way, there is a case in which the number of days in which the accommodation facility is used is greater than or equal to the number of days of the credit period depending on the check-in date and the check-out date specified by the user when the reservation is made. The number of days in which the accommodation facility is used is greater than the number of nights to stay by one. In this case, if the first credit re-check is performed on any day on or after the date the number of days of the credit period prior to the settlement date, the accommodation facility reservation server 1 performs the first credit re-check on or after the check-in date. However, from the viewpoint of the safety of the settlement of the accommodation fee described above, the accommodation facility reservation server 1 performs the credit re-check by the day prior to the check-in date. Specifically, the accommodation facility reservation server 1 performs the first credit re-check on a day which is on or after the date the number of days of the credit period prior to the check-in date and which is near to the reservation date as much as possible. The reason is to perform the credit check where the check-in date is included in the credit period as early as possible. Thereafter, the accommodation facility reservation server 1 further performs the credit re-check on a day which is on or after the date the number of days of the credit period before the check-in date and which is near to the check-in date as much as possible. This credit re-check is referred to as "credit re-check just before check-in". The reason why the credit re-check just before check-in is performed is to maintain a state, in which the credit for settling the accommodation fee is secured, as long as possible within a period in which the user uses the accommodation facility. The accommodation facility reservation server 1 further performs the credit re-check on any day on or after the date the number of days of the credit period prior to the settlement date. This credit re-check is referred to as "credit re-check after check-in".

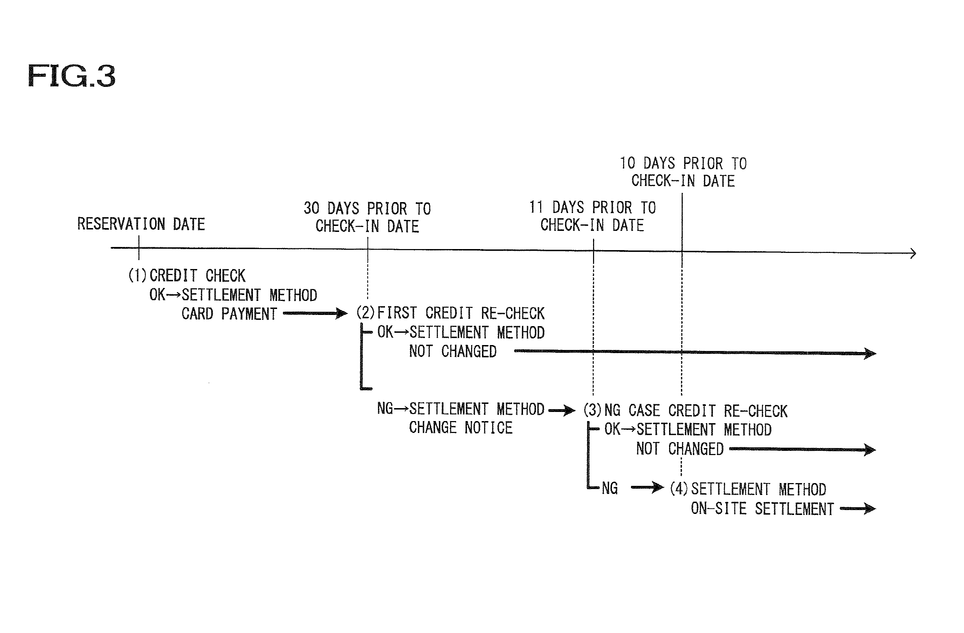

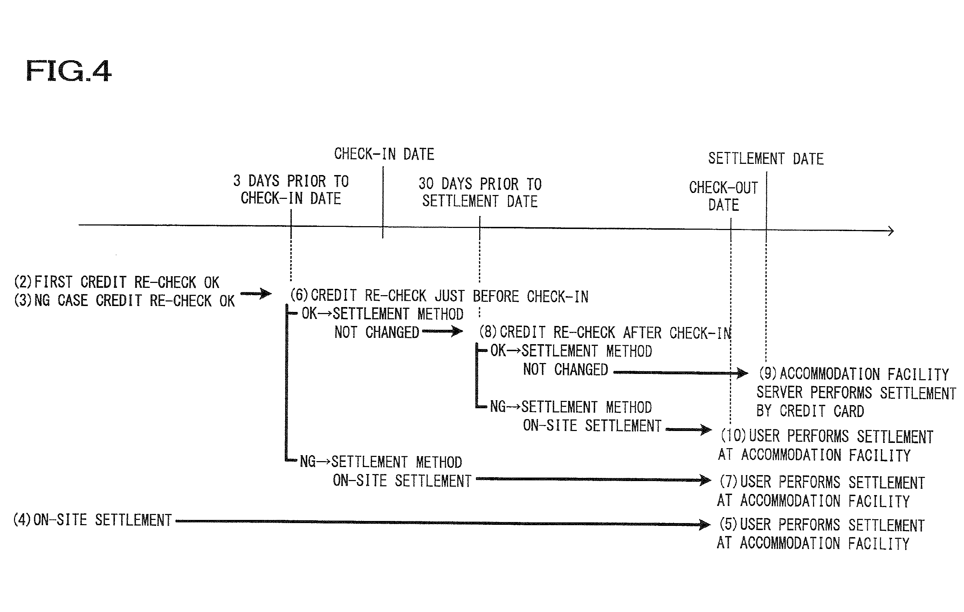

The outline will be described below. Figs. 3 and 4 are diagrams showing a flow from the reservation to the settlement in a case in which the number of days in which the accommodation facility is used is greater than or equal to the number of days of the credit period. Figs. 3 and 4 show an example of a case in which the number of days of the credit period is 30.

As shown in Fig. 3, a user specifies the check-in date and the check-out date. As a result, it is assumed that the number of days in which the accommodation facility is used is 30 or more. The user designates the online card settlement and performs an operation to make a reservation. The accommodation facility reservation server 1 performs the credit check (Fig. 3 (1)) in the same manner as in Fig. 2 (1), and if the accommodation facility reservation server 1 can confirm the credit, the accommodation facility reservation server 1 accepts the reservation whose settlement method is the online card settlement.

Thereafter, on the date 30 days prior to the check-in date, the accommodation facility reservation server 1 performs the first credit re-check of the credit card designated when the reservation is made (Fig. 3 (2)). The date of the first credit re-check is not limited to the date 30 days prior to the check-in date. The accommodation facility reservation server 1 may perform the first credit re-check so that the check-in date is included in the credit period.

When the credit can be confirmed, the accommodation facility reservation server 1 does not change the settlement method. On the other hand, when the credit cannot be confirmed, the accommodation facility reservation server 1 transmits the settlement method change notice e-mail. Thereafter, on the date 11 days prior to the check-in date, the accommodation facility reservation server 1 performs the NG case credit re-check (Fig. 3 (3)). When the credit can be confirmed at the NG case credit re-check, the accommodation facility reservation server 1 does not change the settlement method. On the other hand, if the accommodation facility reservation server 1 cannot confirm the credit at the NG case credit re-check, the accommodation facility reservation server 1 changes the settlement method to the on-site settlement on the date 10 days prior to the check-in date (Fig. 3 (4)). After the settlement method is changed to the on-site settlement, as shown in Fig. 4, when the user stays in the accommodation facility and checks out from the accommodation facility, the user performs settlement of the accommodation fee at the accommodation facility (Fig. 4 (5)). The process described so far is basically the same as that shown in Fig. 2 except for the date on which the first credit re-check is performed.

If the credit can be confirmed at the first credit re-check or if the credit can be confirmed at the NG case credit re-check, the accommodation facility reservation server 1 performs the credit re-check just before check-in of the credit card designated when the reservation is made on the date 3 days prior to the check-in date (Fig. 4 (6)). When the credit can be confirmed at the credit re-check just before check-in, the accommodation facility reservation server 1 does not change the settlement method. On the other hand, when the credit cannot be confirmed at the credit re-check just before check-in, the accommodation facility reservation server 1 changes the settlement method to the on-site settlement at that point. Thereafter, when the user checks out from the accommodation facility, the user performs settlement of the accommodation fee at the accommodation facility (Fig. 4 (7)).

When the credit can be confirmed at the credit re-check just before check-in, after the check-in date, on the date 30 days prior to the settlement date, the accommodation facility reservation server 1 performs the credit re-check after check-in of the credit card designated when the reservation is made (Fig. 4 (8)). The date of the credit re-check after check-in is not limited to the date the number of days of the credit period prior to the settlement date. The accommodation facility reservation server 1 may perform the credit re-check on any day on or after the date the number of days of the credit period prior to the settlement date.

When the credit can be confirmed at the credit re-check after check-in, the accommodation facility reservation server 1 does not change the settlement method. Then, after the user stays in the accommodation facility, the accommodation facility reservation server 1 performs settlement of the accommodation fee on the following day of the check-out date by the credit card designated when the reservation is made (Fig. 4 (9)). On the other hand, when the credit cannot be confirmed at the credit re-check after check-in, the accommodation facility reservation server 1 changes the settlement method to the on-site settlement at that point. Thereafter, when the user checks out from the accommodation facility, the user performs settlement of the accommodation fee at the accommodation facility (Fig. 4 (10)).

When the number of days in which the accommodation facility is used is greater than or equal to the number of days of the credit period, the accommodation facility reservation server 1 may perform the first credit re-check on any day from the day when the number of days from the day to the check-in date is equal to the number of days of the credit period to the previous day of the check-in date and does not need to perform the credit re-check just before check-in. In this case, the accommodation facility reservation server 1 may perform the first credit re-check on a day near the reservation date or may perform the first credit re-check on a day near the check-in date. When the accommodation facility reservation server 1 confirms the first credit re-check on any day on or after the day 10 days prior to the check-in date, the accommodation facility reservation server 1 does not need to perform the NG case credit re-check because the settlement method is changed to the on-site settlement on the date 10 days prior to the check-in date.

When the user actually uses the accommodation facility, a fee other than the accommodation fee fixed when the reservation is made may be incurred. For example, the fee is incurred when the user uses a service whose fee is not included in the accommodation fee fixed when the reservation is made and when the user purchases goods in the accommodation facility. The fee that is incurred when the user uses the accommodation facility in addition to the accommodation fee is referred to as "optional fee". When the user uses the online card settlement, the user can perform settlement of the usage fee including the optional fee and the accommodation fee by the online card settlement. Specifically, for example, at the check-out, the provider of the accommodation facility adjusts an account for the optional fee. The provider requests registration of the optional fee by operating the accommodation facility terminal 3. Then, the accommodation facility reservation server 1 performs the credit check on the optional fee. At this time, if the credit can be confirmed, the accommodation facility reservation server 1 performs settlement of the accommodation fee including the optional fee on the following day of the check-out date. On the other hand, if the accommodation facility reservation server 1 cannot confirm the credit, for example, the user performs a procedure for settling the optional fee on site. Also in this case, the accommodation fee is settled by the online card settlement.

### [3. Configuration of accommodation facility reservation server]

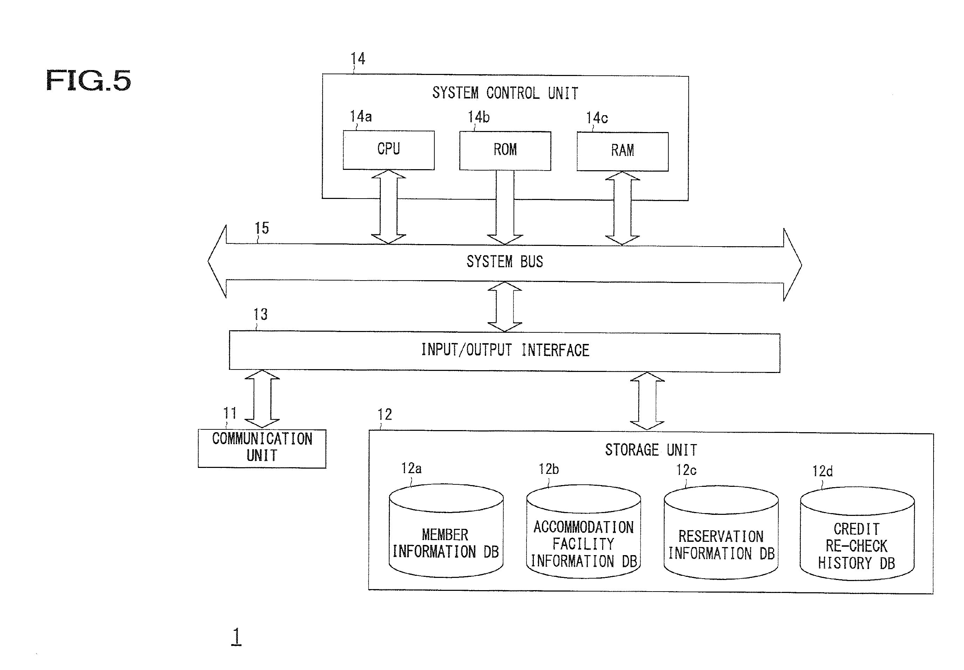

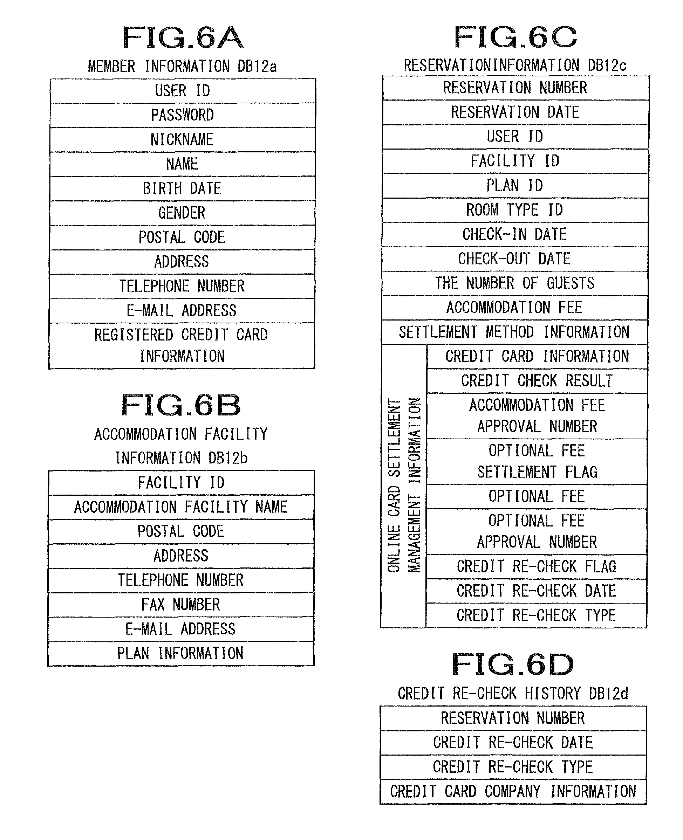

Next, the configuration of the accommodation facility reservation server 1 will be described with reference to Figs. 5 and 6.

Fig. 5 is a block diagram showing an example of a schematic configuration of the accommodation facility reservation server 1 according to the present embodiment. As shown in Fig. 5, the accommodation facility reservation server 1 includes a communication unit 11, a storage unit 12, an input/output interface 13, and a system control unit 14. The system control unit 14 and the input/output interface 13 are connected via a system bus 15.

The communication unit 11 connects to the network NW and controls communication states with the user terminals 4 and the like.

The storage unit 12 includes, for example, a hard disk drive and the like. In the storage unit 12, a member information DB 12a, an accommodation facility information DB 12b, a reservation information DB 12c, a credit re-check history DB 12d, and the like are constructed. The "DB" is an abbreviation of database. The storage unit 12 is an example of a storage means and a check date storage means of the present invention.

Fig. 6A is a diagram showing an example of information registered in the member information DB 12a. In the member information DB 12a, member information related to users who are registered in the information processing system S as a member is registered. Specifically, in the member information DB 12a, a user ID, a password, a nickname, a name, a birth date, a gender, a postal code, an address, a telephone number, an e-mail address, registered credit card information, and the like are associated with each user and registered. The user ID is identification information of the user. The registered credit card information is card information of a credit card registered by the user. In the registered credit card information, for example, credit card company information, a card number, an expiration date, a name of the holder, and the like are set. The credit card company information is information to identify the credit card company. The user registers the card information in advance, so that the user does not need to input the card information each time when making a reservation.

Fig. 6B is a diagram showing an example of information registered in the accommodation facility information DB 12b. In the accommodation facility information DB 12b, accommodation facility information related to the accommodation facility is registered. Specifically, in the accommodation facility information DB 12b, attributes of an accommodation facility, such as a facility ID, an accommodation facility name, a postal code, an address, a telephone number, a fax number, an e-mail address, and plan information, are associated with each accommodation facility and registered. The facility ID is identification information of the accommodation facility. The plan information is information related to accommodation plans provided by the accommodation facility. The accommodation plans are, for example, accommodation services planed by the provider of the accommodation facility. In the plan information, for example, attributes of the accommodation plan, such as a plan ID, an accommodation plan name, a room type ID, content of the accommodation plan, an explanation of accommodation fee per night, are set for each accommodation plan. The plan ID is identification information of the accommodation plan. The room type ID is identification information indicating a type of room.

Fig. 6C is a diagram showing an example of information registered in the reservation information DB 12c. In the reservation information DB 12c, reservation information related to accepted reservations is registered. Specifically, in the reservation information DB 12c, a reservation number, a reservation date, a user ID, a facility ID, a plan ID, a room type, a check-in date, a check-out date, the number of guests, an accommodation fee, a settlement method information, an online card settlement management information are associated with each reservation and registered. The reservation number is identification information of the reservation. The user ID indicates a user who made the reservation. The facility ID indicates a reserved accommodation facility. The plan ID and the room type ID indicate a reserved accommodation plan and a room type respectively. The accommodation fee is a usage fee fixed when the reservation is made. The accommodation fee is determined according to the accommodation plan, the room type, the number of nights to stay, and the number of guests. The settlement method information is information indicating the settlement method. In the settlement method information, either "on-site settlement" or "online card settlement" is set.

The online card settlement management information is registered when the settlement method is the online card settlement. In the online card settlement management information, credit card information, a credit check result, an accommodation fee approval number, an optional fee settlement flag, an optional fee, an optional fee approval number, a credit re-check flag, a credit re-check date, and a credit re-check type are set. The credit card information is card information of a credit card designated by the user. The credit check result indicates a check result at the latest credit check. When OK is set in the credit check result, it indicates that the credit can be confirmed. When NG is set in the credit check result, it indicates that the credit cannot be confirmed. The accommodation fee approval number is an approval number which is transmitted from the settlement server 2 to the accommodation facility reservation server 1 when the credit of the credit card is approved for the settlement of the accommodation fee. The approval number is identification information of a transaction for which the credit is approved. The optional fee settlement flag is information indicating whether or not the optional fee is settled by the online card settlement. When the optional fee settlement flag is set to ON, it indicates that the optional fee is settled by the online card settlement. When the optional fee settlement t flag is set to OFF, it indicates that the optional fee is not settled by the online card settlement. The optional fee approval number is an approval number which is transmitted from the settlement server 2 to the accommodation facility reservation server 1 when the credit of the credit card is approved for the settlement of the optional fee. The credit re-check flag is information indicating whether or not the credit re-check is necessary. When credit re-check flag is set to ON, it indicates that the credit re-check is necessary. When credit re-check flag is set to OFF, it indicates that the credit re-check is not necessary. The credit re-check date indicates the date on which the next credit re-check is performed. The credit re-check type indicates the type of the credit re-check performed on the credit re-check date. In the credit re-check type, any one of "first", "NG case", "just before check-in", and "after check-in" is set. The "first" indicates the first credit re-check. The "NG case" indicates the NG case credit re-check. The "just before check-in" indicates the credit re-check just before check-in. The "after check-in" indicates the credit re-check after check-in.

Fig. 6D is a diagram showing an example of information registered in the credit re-check history DB 12d. In the credit re-check history DB 12d, a credit re-check history including a date on which the credit cannot be confirmed at the first credit re-check and a credit re-check history including a date on which the credit can be confirmed at the NG case credit re-check are registered. Specifically, in the credit re-check history DB 12d, the reservation number, the credit re-check date, the credit re-check type, and the credit card company information are associated with each other and stored. The reservation number indicates the reservation where the credit re-check is performed. The credit re-check date is either one of the date of the first credit re-check at which the credit cannot be confirmed and the date of the NG case credit re-check at which the credit can be confirmed. The credit re-check type is the type of the performed credit re-check. In the credit re-check type, either one of "first" and "NG case" is set. The credit card company information indicates the credit card company which issued the credit card on which the credit re-check is performed.

Next, other information stored in the storage unit 12 will be described. In the storage unit 12, various data, such as an HTML (Hyper Text Markup Language) document, an XML (Extensible Markup Language) document, image data, text data, and an electronic document, for displaying a Web page are stored.

Further, in the storage unit 12, various programs, such as an operating system, a WWW (World Wide Web) server program, a DBMS (Database Management System), and an accommodation facility reservation processing program, are stored. The accommodation facility reservation processing program is a program for performing a search for an accommodation facility, a reservation of an accommodation facility, and a credit check and a settlement of an accommodation fee. The accommodation facility reservation processing program is an example of an information processing program of the present invention. For example, the various programs may be acquired from another server apparatus or the like via the network NW or may be recorded in a recording medium such as a DVD (Digital Versatile Disc) and read from the recording medium via a drive apparatus.

The input/output interface 13 performs interface processing between the communication unit 11, the storage unit 12, and the system control unit 14.

The system control unit 14 includes a CPU 14a, a ROM (Read Only Memory) 14b, a RAM (Random Access Memory) 14c, and the like. The CPU 14a reads and executes the various programs, so that the system control unit 14 functions as a first check means, a reservation means, a second check means, an output means, a third check means, a fourth check means, a fifth check means, a storage control means, an estimation means, a determination means, and a settlement means of the present invention.

The accommodation facility reservation server 1 may include a plurality of server apparatuses. For example, a server apparatus that searches an accommodation facility, a server apparatus that performs processes for reserving an accommodation facility and checking credit, a server apparatus that transmits a Web page according to a request from the user terminal 4, a server apparatus that manages databases, and the like may be connected to each other via LAN or the like.

### [4. Operation of information processing system]

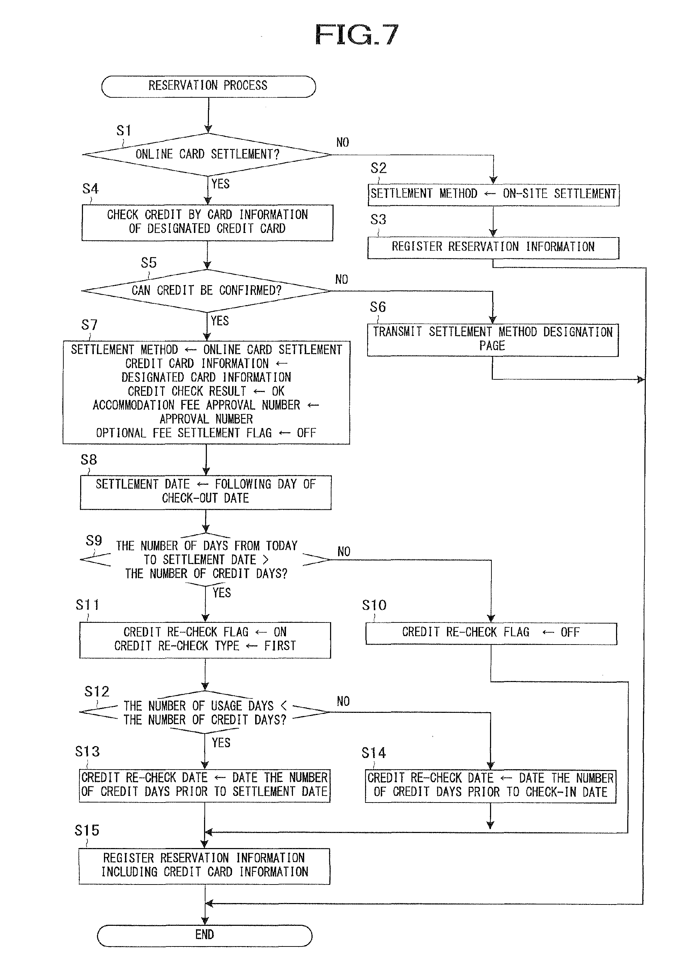

Next, an operation of the information processing system S will be described with reference to Figs. 7 to 12.

Fig. 7 is a flowchart showing a process example of the reservation process of the system control unit 14 in the accommodation facility reservation server 1 according to the present embodiment.

For example, a user searches for an accommodation facility on an accommodation facility site and selects desired accommodation facility, accommodation plan, and room type. Next, the user specifies a check-in date, a check-out date, and the number of guests. Then, a settlement method designation page is displayed on a screen of the user terminal 4. The settlement method designation page is a Web page for designating a settlement method. Here, if the user selects the online card settlement as the settlement method, the user inputs card information of a credit card used for the settlement. At this time, the user can designate a credit card whose information is registered in the member information. In this case, the user does not input the card information. The user performs necessary selection operations and input operations, and then selects a button to request a reservation. Then, the user terminal 4 transmits a reservation request to the accommodation facility reservation server 1. The reservation request includes a user ID, a facility ID, a plan ID, a room ID which are selected by the user, the check-in date, the check-out date, and the number of guests. The facility ID, the plan ID, and the room ID correspond to the accommodation facility, the accommodation plan, and the room type, respectively, which are selected by the user. The reservation request also includes information indicating whether or not a credit card whose information is registered in the member information is used and the card information inputted by the user. The reservation process is started when the accommodation facility reservation server 1 receives the reservation request.

As shown in Fig. 7, the system control unit 14 determines whether or not the settlement method selected by the user is the online card settlement (step S1). At this time, if the system control unit 14 determines that the settlement method is not the online card settlement (step S1: NO), the system control unit 14 sets the settlement method information to "on-site settlement" (step S2). Next, the system control unit 14 registers reservation information (step S3). Specifically, the system control unit 14 generates a new reservation number. Next, the system control unit 14 generates reservation information including the reservation number, the information included in the reservation request, the settlement method information which is set, and the like. Next, the system control unit 14 registers the generated reservation information in the reservation information DB 12c. When completing the process of step S3, the system control unit 14 ends the reservation process.

On the other hand, if the system control unit 14 determines that the settlement method is the online card settlement (step S1: YES), the system control unit 14 , as the first check means, checks the credit on the basis of the card information of the credit card designated by the user (step S4). Specifically, the system control unit 14 calculates the accommodation fee based on the facility ID, the plan ID, the room type ID, and the number of guests included in the reservation request. Further, the system control unit 14 acquires the card information of the credit card designated by the user. When the user inputs card information, the system control unit 14 acquires the card information from the reservation information request. On the other hand, when the user designates a registered credit card, the system control unit 14 searches for member information, corresponding to the user ID of the user who requests the reservation, from the member information DB 12a. Then, the system control unit 14 acquires registered credit card information from the searched member information. When the system control unit 14 acquires the card information, the system control unit 14 transmits a credit check request to the settlement server 2. The credit check request includes the acquired card information and a used amount of money, and the like. The system control unit 14 sets the used amount of money to the accommodation fee.

When the settlement server 2 receives the credit check request, the settlement server 2 determines whether or not to approve the credit. Specifically, the settlement server 2 determines whether or not the card information included in the credit check request is card information of a valid credit card. The settlement server 2 also determines whether or not the validity period of the credit card expires on the basis of the card information. The settlement server 2 also determines whether or not the current available credit of the credit card is greater than or equal to the used amount of money included in the credit check request.

If the card information is card information of a valid credit card, the validity period does not expire, and the available credit is greater than or equal to the used amount of money, the settlement server 2 approves the credit. In this case, the settlement server 2 issues a new approval number. Further, the settlement server 2 secures a credit frame corresponding to the accommodation fee. For example, the settlement server 2 associates the approval number, the accommodation fee, the card information, and the like with each other and stores these data in a database included in the settlement server 2. The settlement server 2 updates the available credit corresponding to the card information. Then, the settlement server 2 transmits a credit check response including the approval number to the accommodation facility reservation server 1.

On the other hand, if the card information is not card information of a valid credit card, the validity period expires, or the available credit is smaller than the used amount of money, the settlement server 2 does not approve the credit. In this case, the settlement server 2 transmits a credit check response including an error type to the accommodation facility reservation server 1. In this case, the credit check response includes no approval number. The error type is information indicating a reason why the credit cannot be approved. Examples of the error type include "invalid card", "expired card", "over credit limit amount", and the like. The "invalid card" indicates that the card information is invalid. The "expired card" indicates that the validity period of the credit card has expired. The "over credit limit amount" indicates that the used amount of money exceeds the available credit.

When the system control unit 14 receives the credit check response, the system control unit 14 determines whether or not the credit can be confirmed (step S5). At this time, if the system control unit 14 receives the credit check response including no approval number, the system control unit 14 determines that the credit cannot be confirmed (step S5: NO). In this case, the system control unit 14 transmits a settlement method designation page to the user terminal 4 which is the transmission source of the reservation request (step S6). When completing the process of step S6, the system control unit 14 ends the reservation process. The user designates the settlement method again on the settlement method designation page. Then, when the user selects a button to request a reservation, the user terminal 4 transmits a reservation request to the accommodation facility reservation server 1.

In step S5, if the system control unit 14 receives the credit check response including an approval number from the settlement server 2, the system control unit 14 determines that the credit can be confirmed (step S5: YES). In this case, the system control unit 14 sets the settlement method information to "online card settlement". Further, the system control unit 14 sets the credit card information to the card information acquired in step S4. The system control unit 14 sets the credit check result to OK. Further, the system control unit 14 sets the accommodation fee approval number to the approval number included in the credit check response. Further, the system control unit 14 sets the optional fee settlement flag to OFF (step S7). Next, the system control unit 14 sets the settlement date to the following day of the check-out date included in the reservation request (step S8).

Next, the system control unit 14 determines whether or not the number of days from today to the settlement date exceeds the number of credit days (step S9). At this time, if the system control unit 14 determines that the number of days from today to the settlement date does not exceed the number of credit days (step S9: NO), the system control unit 14 sets the credit re-check flag to OFF (step S10). Next, the system control unit 14 proceeds to step S15.

On the other hand, if the system control unit 14 determines that the number of days from today to the payment date exceeds the number of credit days (step S9: YES), the system control unit 14 sets the credit re-check flag to ON. Further, the system control unit 14 sets the credit re-check type to "first" (step S11). Next, the system control unit 14 calculates the number of days in which the accommodation facility is used on the basis of the check-in date and the check-out date included in the reservation request (step S8). Then, the system control unit 14 determines whether or not the number of days in which the accommodation facility is used is smaller than the number of credit days (step S12). At this time, if the system control unit 14 determines that the number of days in which the accommodation facility is used is smaller than the number of credit days (step S12: YES), the system control unit 14 sets the credit re-check date to the date the number of credit days prior to the settlement date (step S13). Next, the system control unit 14 proceeds to step S15.

On the other hand, if the system control unit 14 determines that the number of days in which the accommodation facility is used is greater than or equal to the number of credit days (step S12: NO), the system control unit 14 sets the credit re-check date to the date the number of credit days prior to the check-in date (step S14). Next, the system control unit 14 proceeds to step S15.

In step S15, the system control unit 14, as the reservation means, registers the reservation information including the card information of the credit card designated by the user. Specifically, the system control unit 14 generates the reservation information including the new reservation number, the information included in the reservation request, the settlement method information which is set, the credit card information, the credit check result, the accommodation fee approval number, the optional fee settlement flag, the credit re-check flag, the credit re-check date, the credit re-check type, and the like. Next, the system control unit 14 registers the generated reservation information in the reservation information DB 12c. The system control unit 14 accepts the requested reservation by registering the reservation information. When completing the process of step S15, the system control unit 14 ends the reservation process.

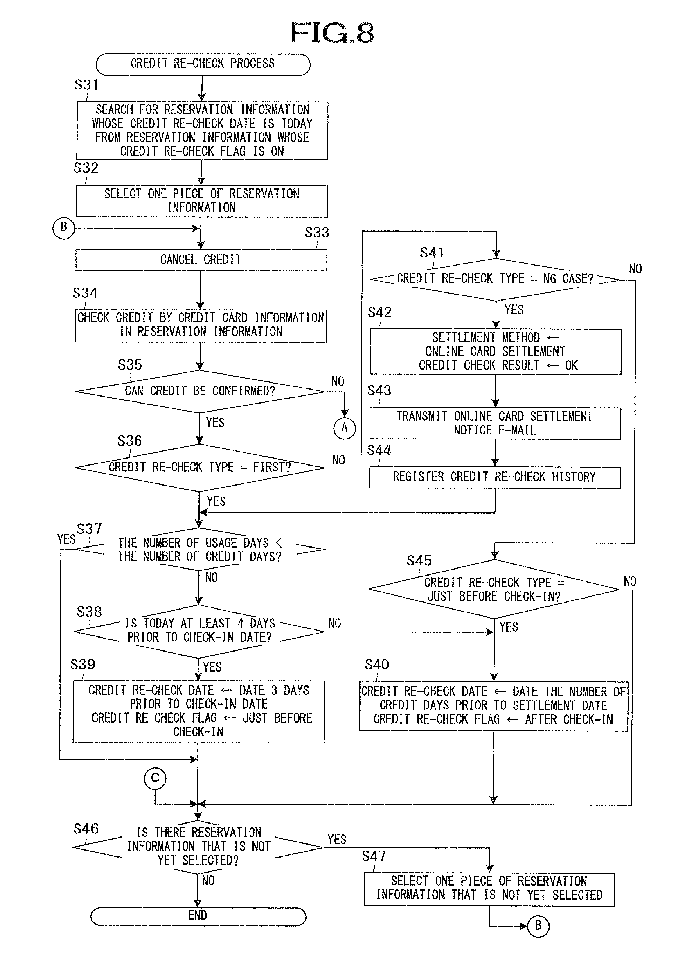

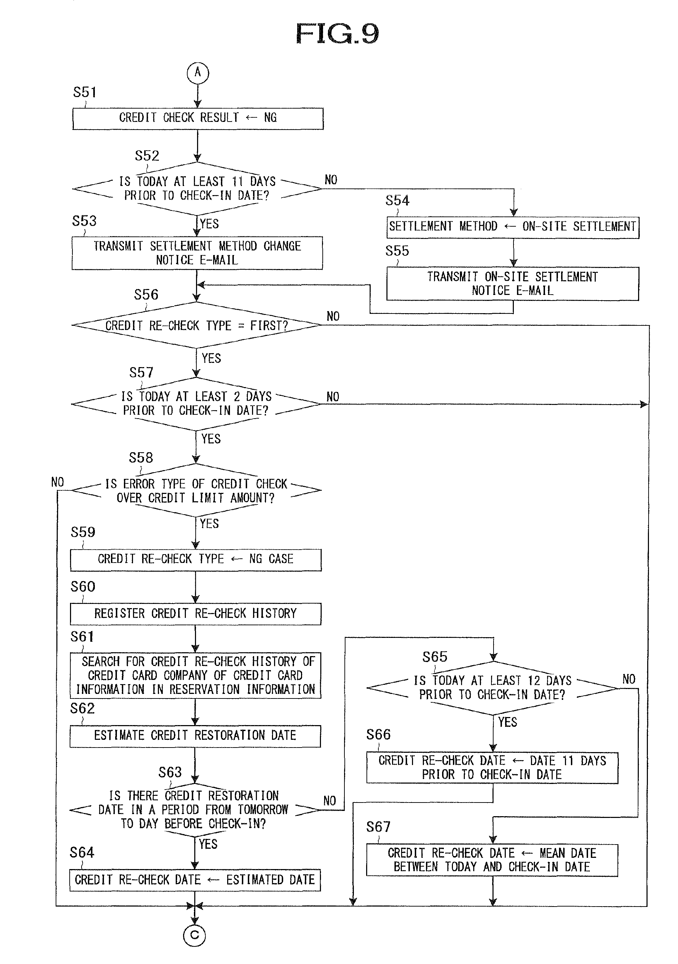

Figs. 8 and 9 are flowcharts showing a process example of a credit re-check process of the system control unit 14 in the accommodation facility reservation server 1 according to the settlement embodiment. The accommodation facility reservation server 1 performs the credit re-check process, a settlement method change process, and a settlement process once a day. The settlement method change process and the settlement process will be described later. The accommodation facility reservation server 1 may continuously performs the credit re-check process, the settlement method change process, and the settlement process.

As shown in Fig. 8, the system control unit 14 searches for one or more pieces of reservation information whose credit re-check date is today among one or more pieces of reservation information whose credit re-check flag is set to ON from the reservation information DB 12c (step S31). Next, the system control unit 14 selects one of the searched pieces of reservation information (step S32). Next, the system control unit 14 cancels the credit secured by the credit check when the reservation is made for the reservation corresponding to the selected reservation information (step S33). The reason why this process is performed is to prevent a plurality of credit frames from being secured for one reservation. Specifically, the system control unit 14 acquires the accommodation fee approval number from the selected reservation information. Next, the system control unit 14 transmits a credit cancel request including the acquired accommodation fee approval number as the approval number to the settlement server 2. When the settlement server 2 receives the credit cancel request, the settlement server 2 cancels the credit frame corresponding to the approval number included in the credit cancel request. However, if the credit period from the date when the previous credit check was performed expires, the system control unit 14 does not need to cancel the credit.

Next, the system control unit 14, as the second to the fifth check means, checks the credit on the basis of the credit card information included in the selected reservation information (step S34). The content of this process is the same as that of the process of step S4 in the reservation process shown in Fig. 7. However, the system control unit 14 puts the credit card information included in the selected reservation information into the credit check request. Next, the system control unit 14 determines whether or not the credit can be confirmed (step S35). At this time, if the system control unit 14 determines that the credit cannot be confirmed (step S35: NO), the system control unit 14 proceeds to step S51. On the other hand, if the system control unit 14 determines that the credit can be confirmed (step S35: YES), the system control unit 14 overwrites the accommodation fee approval number included in the selected reservation information with the approval number included in the credit check response received from the settlement server 2 in step S34.

Next, the system control unit 14 determines whether or not the credit re-check type included in the selected reservation information is the "first" (step S36). At this time, if the system control unit 14 determines that the credit re-check type is not the "first" (step S36: NO), the system control unit 14 proceeds to step S41. On the other hand, if the system control unit 14 determines that the credit re-check type is the "first" (step S36: YES), the system control unit 14 calculates the number of days in which the accommodation facility is used on the basis of the check-in date and the check-out date included in the selected reservation information. Then, the system control unit 14 determines whether or not the number of days in which the accommodation facility is used is smaller than the number of credit days (step S37). At this time, if the system control unit 14 determines that the number of days in which the accommodation facility is used is smaller than the number of credit days (step S37: YES), the system control unit 14 proceeds to step S46.

On the other hand, if the system control unit 14 determines that the number of days in which the accommodation facility is used is greater than or equal to the number of credit days (step S37: NO), the system control unit 14 determines whether or not today is at least four days prior to the check-in date included in the selected reservation information (step S38). At this time, if the system control unit 14 determines that today is at least four days prior to the check-in date (step S38: YES), the system control unit 14 sets the credit re-check date included in the selected reservation information to the date three days prior to the check-in date. Further, the system control unit 14 changes the credit re-check type included in the selected reservation information to "just before check-in" (step S39). Next, the system control unit 14 proceeds to step S46.

On the other hand, if the system control unit 14 determines that today is three days or less prior to the check-in date (step S38: NO), the system control unit 14 sets the credit re-check date included in the selected reservation information to the date the number of credit days prior to the settlement date. Further, the system control unit 14 changes the credit re-check type included in the selected reservation information to "after check-in" (step S40). Next, the system control unit 14 proceeds to step S46. In other words, the system control unit 14 performs setting so that the credit re-check after check-in is performed instead of the NG case credit re-check. The reason is because, if the first credit re-check is performed on or after the date three days prior to the check-in date, the purpose of the credit re-check just before check-in is achieved.

In step S41, the system control unit 14 determines whether or not the credit re-check type included in the selected reservation information is the "NG case". At this time, if the system control unit 14 determines that the credit re-check type is not the "NG case" (step S41: NO), the system control unit 14 proceeds to step S45. On the other hand, if the system control unit 14 determines that the credit re-check type is the "NG case" (step S41: YES), the system control unit 14 sets the settlement method information included in the selected reservation information to "online card settlement". Further, the system control unit 14 sets the credit check result included in the selected reservation information to OK (step S42).

Next, the system control unit 14, as the output means, transmits the online card settlement notice e-mail (step S43). Specifically, the system control unit 14 searches for member information corresponding to the user ID included in the selected reservation information from the member information DB 12a. Next, the system control unit 14 acquires an e-mail address from the searched member information. Next, the system control unit 14 generates the online card settlement notice e-mail. At this time, the system control unit 14 sets the destination of the online card settlement notice e-mail to the acquired e-mail address. Further, the system control unit 14 puts a sentence indicating that the settlement method is not changed from the online card settlement to the on-site settlement because the credit is confirmed into the body text of the online card settlement notice e-mail. Then, the system control unit 14 transmits the generated online card settlement notice e-mail.

Next, the system control unit 14, as the storage control means, registers the credit re-check history (step S44). Specifically, the system control unit 14 acquires the reservation number and the credit re-check date from the selected reservation information. Further, the system control unit 14 sets the credit re-check type to "NG case". Further, the system control unit 14 acquires the credit card company information from the credit card information included in the selected reservation information. Then, the system control unit 14 registers the credit re-check history including the reservation number, the credit re-check date, the credit re-check type, and the credit card company information in the credit re-check history DB 12d. When completing the process of step S44, the system control unit 14 proceeds to step S37. In short, when the number of days in which the accommodation facility is used is greater than or equal to the number of credit days, the system control unit 14 performs setting so that the credit re-check just before check-in or the credit re-check after check-in is performed.

In step S45, the system control unit 14 determines whether or not the credit re-check type included in the selected reservation information is the "just before check-in". At this time, if the system control unit 14 determines that the credit re-check type is the "just before check-in" (step S45: YES), the system control unit 14 proceeds to step S40. On the other hand, if the system control unit 14 determines that the credit re-check type is not the "just before check-in" (step S45: NO), the system control unit 14 proceeds to step S46. In this case, the credit re-check after check-in is performed this time, and the system control unit 14 does not perform setting so that the credit re-check is further performed.

As shown in Fig. 9, in step S51, the system control unit 14 sets the credit check result included in the selected reservation information to NG. Next, the system control unit 14 determines whether or not today is at least 11 days prior to the check-in date included in the selected reservation information (step S52). At this time, if the system control unit 14 determines that today is at least 11 days prior to the check-in date (step S52: YES), the system control unit 14, as the output means, transmits the settlement method change notice e-mail (step S53). Specifically, the system control unit 14 generates the settlement method change notice e-mail. At this time, the system control unit 14 sets the destination address in the same manner as in step S43. Further, the system control unit 14 puts a sentence indicating that the settlement method will be changed from the online card settlement to the on-site settlement on the date ten days prior to the check-in date into the body text of the settlement method change notice e-mail. Then, the system control unit 14 transmits the generated settlement method change notice e-mail. When completing the process of step S53, the system control unit 14 proceeds to step S56.

On the other hand, if the system control unit 14 determines that today is ten days or less prior to the check-in date (step S52: NO), the system control unit 14 changes the settlement method information included in the selected reservation information to the "on-site settlement " (step S54). Next, the system control unit 14, as the output means, transmits the on-site settlement notice e-mail (step S55). Specifically, the system control unit 14 generates the on-site settlement notice e-mail. At this time, the system control unit 14 sets the destination address in the same manner as in step S43. Further, the system control unit 14 puts a sentence indicating that the settlement method has been changed from the online card settlement to the on-site settlement into the body text of the on-site settlement notice e-mail. Then, the system control unit 14 transmits the generated on-site settlement notice e-mail. When completing the process of step S55, the system control unit 14 proceeds to step S56. The system control unit 14 may also transmit the on-site settlement notice e-mail to the provider of the reserved accommodation facility.

In step S56, the system control unit 14 determines whether or not the credit re-check type included in the selected reservation information is the "first". At this time, if the system control unit 14 determines that the credit re-check type is not the "first" (step S56: NO), the system control unit 14 proceeds to step S46. In this case, since the credit re-check this time is not the first credit re-check, the system control unit 14 does not perform setting so that the NG case credit re-check is performed. On the other hand, if the system control unit 14 determines that the credit re-check type is the "first" (step S56: YES), the system control unit 14 determines whether or not today is at least two days prior to the check-in date included in the selected reservation information (step S57). At this time, if the system control unit 14 determines that today is on or after the check-in date (step S57: NO), the system control unit 14 proceeds to step S46. In this case, there is no day on which the NG case credit re-check can be performed by the day prior to the check-in date.

On the other hand, if the system control unit 14 determines that today is at least two days prior to the check-in date (step S57: YES), the system control unit 14 acquires the error type included in the credit check response received from the settlement server 2 in step S34. Then, the system control unit 14, as the determination means, determines whether or not the error type is the "over credit limit amount" (step S58). At this time, if the system control unit 14 determines that the error type is not the "over credit limit amount" (step S58: NO), the system control unit 14 proceeds to step S46. In this case, the system control unit 14 does not perform setting so that the NG case credit re-check is performed. The reason why the system control unit 14 performs the NG case credit re-check only when the error type is the "over credit limit amount" is because there is a probability that the credit can be confirmed by the NG case credit re-check. On the other hand, if the error type is the "invalid card", the probability that the credit can be confirmed is extremely low. When the error type is the "expired card", it is considered that the credit cannot be confirmed unless the user renews the validity period of the credit card. The system control unit 14 may perform setting so that the NG case credit re-check is performed regardless of the error type.

On the other hand, if the system control unit 14 determines that the error type is the "over credit limit amount" (step S58: YES), the system control unit 14 changes the credit re-check type included in the selected reservation information to the "NG case" (step S59). Next, the system control unit 14, as the storage control means, registers the credit re-check history (step S60). The content of this process is basically the same as that of the process of step S44. However, the system control unit 14 sets the credit re-check type to "first".

Next, the system control unit 14 acquires the credit card company information from the credit card information included in the selected reservation information. Next, the system control unit 14 searches for the credit re-check history that includes the acquired credit card company information from the credit re-check history DB 12d (step S61).

Next, the system control unit 14, as the estimation means, estimates the credit restoration date of the credit card issued by the credit card company indicated by the acquired credit card company information on the basis of the searched credit re-check history (step S62). The reason why the credit restoration date is estimated for each credit card company is because the credit restoration date such as the credit frame clear date may vary for each credit card company information. Specifically, the system control unit 14 extracts a set of credit re-check histories that include the same reservation information from the searched credit re-check histories. The set of credit re-check histories that include the same reservation information is a combination of the credit re-check history where the credit re-check type is "first" and the credit re-check history where the credit re-check type is "NG case". The system control unit 14 specifies the mean date between the date of the first credit re-check and the date of the NG case credit re-check. Specifically, the system control unit 14 calculates the number of days from the credit re-check date included in the credit re-check history where the credit re-check type is "first" to the credit re-check date included in the credit re-check history where the credit re-check type is "NG case". Next, the system control unit 14 calculates the mean date by adding half of the calculated number of days to the credit re-check date included in the credit re-check history where the credit re-check type is "first". At this time, the system control unit 14 determines the mean date by extracting only day from the calculated year, month, and day. For example, it is assumed that the date of the first credit re-check is January 25, 2012 and the date of the NG case credit re-check is February 10, 2012. In this case, the mean date is February 2, 2012, which is eight days after January 25, 2012. However, the final mean date is 2, which is obtained by eliminating February and 2012 from February 2, 2012. The system control unit 14 calculates the mean date for each extracted set of credit re-check histories. Next, the system control unit 14 specifies a date on which the mean dates are concentrated as the credit restoration date on the basis of the distribution of the mean dates in one month. For example, the system control unit 14 may specify a date where the largest number of the mean dates are present and determine the specified date as the credit restoration date. Or, the system control unit 14 may specify a date where a predetermined ratio or more of the mean dates of the calculated mean dates are present as the credit restoration date. In this case, the system control unit 14 may specify a plurality of credit restoration dates. Or, the system control unit 14 may divide one month into a plurality of periods and specify a period where a predetermined ratio or more of the mean dates are present. Then, the system control unit 14 may specify the mean date of the specified period as the credit restoration date or may specify each date from the first date to the last date of the specified period as the credit restoration date.

When the system control unit 14 estimates the credit restoration date, the system control unit 14 determines whether or not there is the estimated credit restoration date in a period from tomorrow to the previous day of the check-in date included in the selected reservation information (step S63). At this time, if the system control unit 14 determines that there is the credit restoration date in a period from tomorrow to the previous day of the check-in date (step S63: YES), the system control unit 14 sets the credit re-check date included in the selected reservation information to the estimated credit restoration date (step S64). If there are a plurality of credit restoration dates in a period from tomorrow to the previous day of the check-in date, the system control unit 14 sets the credit re-check date to any one of the estimated credit restoration dates. At this time, the system control unit 14 may set the credit re-check date to the credit restoration date where there is the highest probability that the credit is restored. For example, the system control unit 14 may set the credit re-check date to a date where the largest number of the mean dates are present among from the credit restoration dates included in a period from tomorrow to the previous day of the check-in date. When completing the process of step S64, the system control unit 14 proceeds to step S46.

On the other hand, if the system control unit 14 determines that there is no credit restoration date in a period from tomorrow to the previous day of the check-in date (step S63: NO), the system control unit 14 determines whether or not today is at least 12 days prior to the check-in date included in the reservation information (step S65). At this time, if the system control unit 14 determines that today is at least 12 days prior to the check-in date (step S65: YES), the system control unit 14 sets the credit re-check date included in the selected reservation information to the date 11th day prior to the check-in date (step S66). Next, the system control unit 14 proceeds to step S46. On the other hand, if the system control unit 14 determines that today is 11 days or less prior to the check-in date (step S65: NO), the system control unit 14 sets the credit re-check date included in the selected reservation information to the mean date between today and the check-in date (step S67). Next, the system control unit 14 proceeds to step S46. If the system control unit 14 cannot confirm the credit by performing the first credit re-check on any day 11 days or less prior to the check-in date, the system control unit 14 does not need to perform the NG case credit re-check. Further, if there is no estimated credit restoration date in a period from tomorrow to the previous day of the check-in date, the system control unit 14 does not need to perform the NG case credit re-check.

In step S46, the system control unit 14 determines whether or not there is reservation information that is not yet selected in the reservation information searched in step S31. At this time, if the system control unit 14 determines that there are one or more pieces of reservation information that are not yet selected (step S46: YES), the system control unit 14 selects one of the pieces reservation information that are not yet selected (step S47). Next, the system control unit 14 proceeds to step S33. The system control unit 14 repeats the processes of steps S33 to S47, so that the system control unit 14 performs the credit re-check for each reservation where the credit re-check is required today. When the system control unit 14 determines that all the pieces of reservation information are selected (step S46: NO), the system control unit 14 completes the credit re-check process.

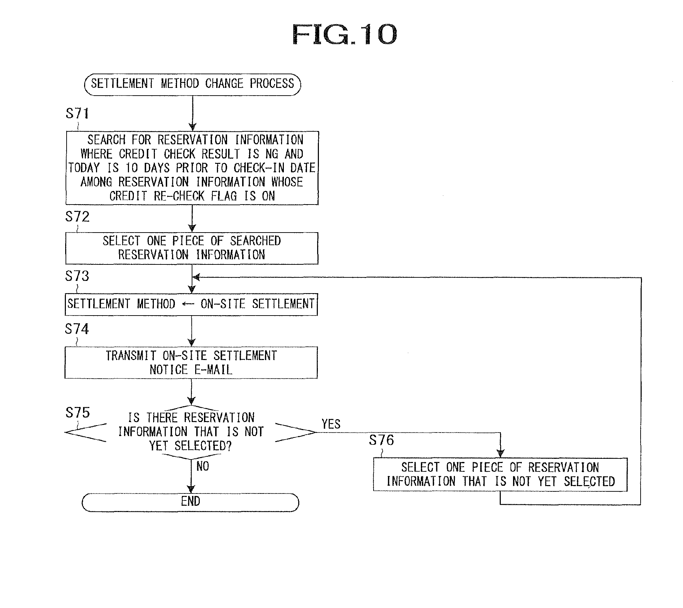

Fig. 10 is a flowchart showing a process example of the settlement method change process of the system control unit 14 in the accommodation facility reservation server 1 according to the present embodiment.

As shown in Fig. 10, the system control unit 14 searches for one or more pieces of reservation information where the credit check result is set to NG and today is the day 10 days prior to the check-in date among one or more pieces of reservation information whose credit re-check flag is set to ON from the reservation information DB 12c (step S71). Next, the system control unit 14 selects one of the searched pieces of reservation information (step S72). Next, the system control unit 14 changes the settlement method information included in the selected reservation information to the "on-site settlement" (step S73). Next, the system control unit 14 transmits the on-site settlement notice e-mail (step S74). The content of this process is the same as that of the process of step S55 in the credit re-check process shown in Fig. 9.

Next, the system control unit 14 determines whether or not there is reservation information that is not yet selected in the reservation information searched in step S71 (step S75) . At this time, if the system control unit 14 determines that there are one or more pieces of reservation information that are not yet selected (step S75: YES), the system control unit 14 selects one of the pieces reservation information that are not yet selected (step S76). Next, the system control unit 14 proceeds to step S73. The system control unit 14 repeats the processes of steps S73 to S76, so that the system control unit 14 changes the payment method of each reservation, where the credit cannot be confirmed by the credit re-check and today is the day 10 days prior to the check-in date, to the on-site settlement. When the system control unit 14 determines that all the pieces of reservation information are selected (step S75: NO), the system control unit 14 completes the settlement method change process.

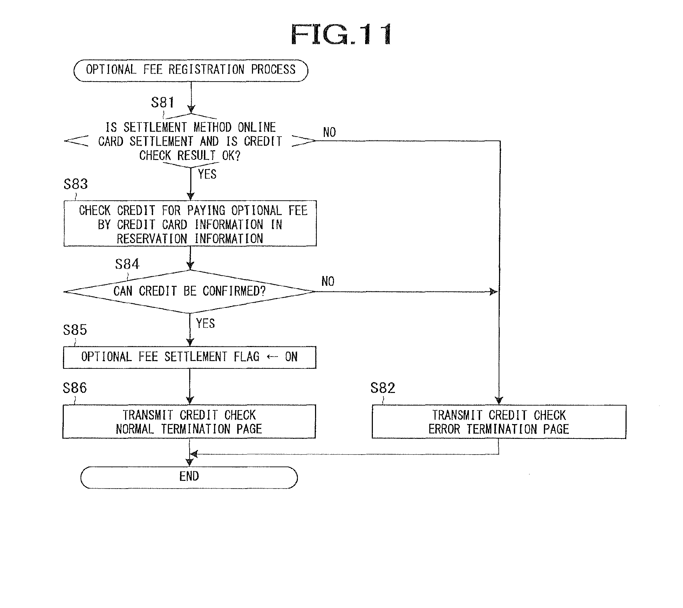

Fig. 11 is a flowchart showing a process example of an optional fee registration process of the system control unit 14 in the accommodation facility reservation server 1 according to the present embodiment.

When an optional fee is incurred, the provider of the accommodation facility operates the accommodation facility terminal 3 to register the optional fee. At this time, the provider inputs the optional fee, the reservation number, and the like. Then, the accommodation facility terminal 3 transmits an optional fee registration request to the accommodation facility reservation server 1. The optional fee registration process is started when the accommodation facility reservation server 1 receives the optional fee registration request.

As shown in Fig. 11, the system control unit 14 searches for reservation information corresponding to the reservation number included in the optional fee registration request from the reservation information DB 12c. Next, the system control unit 14 determines whether or not the settlement method information included in the searched reservation information is set to "online card settlement" and the credit check result included in the searched reservation information is set to OK (step S81).

At this time, if the system control unit 14 determines that the settlement method information is not set to "online card settlement" or the credit check result is not set to OK (step S81: NO), the system control unit 14 transmits a credit check error termination page to the accommodation facility terminal 3 that is the transmission source of the optional fee registration request (step S82). The credit check error termination page is a Web page that displays a message indicating that the credit cannot be confirmed for the optional fee. When completing the process of step S82, the system control unit 14 completes the optional fee registration process.

On the other hand, if the system control unit 14 determines that the settlement method information is set to "online card settlement" and the credit check result is set to OK (step S81: YES), the system control unit 14 checks the credit for settling the optional fee on the basis of the credit card information included in the searched reservation information (step S83). The content of this process is basically the same as that of the process of step S34 in the credit re-check process shown in Fig. 8. However, the system control unit 14 puts the optional fee in the credit check request instead of the accommodation fee.

Next, the system control unit 14 determines whether or not the credit can be confirmed (step S84). At this time, if the system control unit 14 determines that the credit cannot be confirmed (step S84: NO), the system control unit 14 proceeds to step S82. On the other hand, if the system control unit 14 determines that the credit can be confirmed (step S84: YES), the system control unit 14 puts the approval number included in the credit check response received from the settlement server 2 in step S83 into the searched reservation information as the optional fee approval number. Next, the system control unit 14 sets the optional fee settlement flag included in the searched reservation information to ON. Further, the system control unit 14 puts the optional fee included in the optional fee registration request into the searched reservation information (step S85). Next, the system control unit 14 transmits a credit check normal termination page to the accommodation facility terminal 3 which is the transmission source of the optional fee registration request (step S86). The credit check normal termination page is a Web page that displays a message indicating that the credit can be confirmed for the optional fee. When completing the process of step S86, the system control unit 14 ends the optional fee registration process.

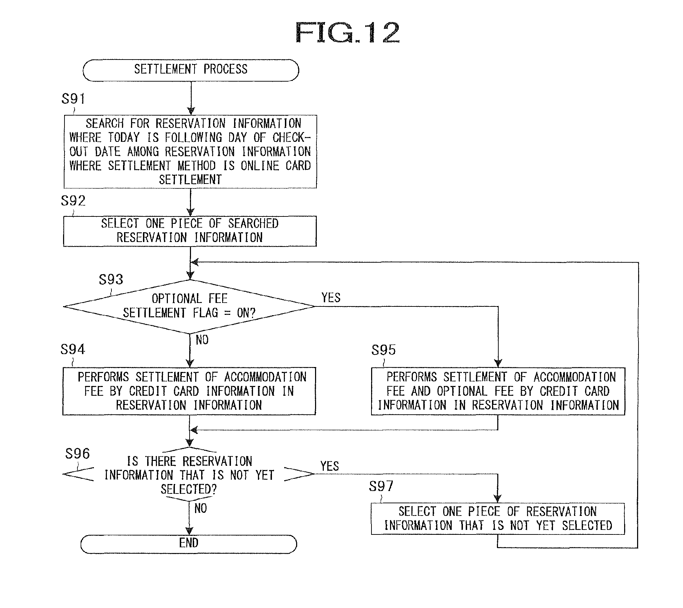

Fig. 12 is a flowchart showing a process example of the settlement process of the system control unit 14 in the accommodation facility reservation server 1 according to the present embodiment.

As shown in Fig. 12, the system control unit 14 searches for one or more pieces of reservation information where the following day of the check-out date is today among one or more pieces of reservation information where the settlement method information is set to "online card settlement" from the reservation information DB 12c (step S91). Next, the system control unit 14 selects one of the searched pieces of reservation information (step S92). Next, the system control unit 14 determines whether or not the optional fee settlement flag included in the selected reservation information is set to ON (step S93). At this time, if the system control unit 14 determines that the optional fee settlement flag is not set to ON (step S93: NO), the system control unit 14 performs settlement of the accommodation fee included in the selected reservation information on the basis of the credit card information included in the selected reservation information (step S94). Specifically, the system control unit 14 transmits a settlement request to the settlement server 2. The settlement request includes the credit card information, the used amount of money, and the approval number included in the selected reservation information. The system control unit 14 puts the accommodation fee and the accommodation fee approval number included into the selected reservation information as the used amount of money and the approval number. When the settlement server 2 receives the settlement request, the settlement server 2 performs a process to fix a usage fee to be withdrawn from the bank account of the user corresponding to the approval number included in the settlement request by the accommodation fee included in the settlement request. When completing the process of step S94, the system control unit 14 proceeds to step S96.

On the other hand, if the system control unit 14 determines that the optional fee payment flag is set to ON (step S93: YES), the system control unit 14, as the settlement means, performs settlement of the usage fee including the accommodation fee and the optional fee included in the selected reservation information on the basis of the credit card information included in the selected reservation information (step S95). Specifically, the system control unit 14 performs settlement of the accommodation fee in the same manner as in step S94. Further, the system control unit 14 transmits a settlement request, in which the optional fee and the optional fee approval number included in the selected reservation information are set, to the settlement server 2. Thereby, the system control unit 14 performs settlement of the optional fee. When completing the process of step S95, the system control unit 14 proceeds to step S96.

In step S96, the system control unit 14 determines whether or not there is reservation information that is not yet selected in the reservation information searched in step S91. At this time, if the system control unit 14 determines that there are one or more pieces of reservation information that are not yet selected (step S96: YES), the system control unit 14 selects one of the pieces reservation information that are not yet selected (step S97). Next, the system control unit 14 proceeds to step S93. The system control unit 14 repeats the processes of steps S93 to S97, so that the system control unit 14 performs settlement of the usage fee for each reservation required to perform the payment today. When the system control unit 14 determines that all the pieces of reservation information are selected (step S96: NO), the system control unit 14 completes the settlement process.

As described above, according to the present embodiment, when the reservation where the number of days from today to the date of use exceeds the number of credit days is requested as a reservation where the online card settlement is specified, the system control unit 14 in the accommodation facility reservation server 1 checks the validity of the designated credit card. If the credit card can be confirmed to be valid, the system control unit 14 accepts the reservation, stores the reservation information including the credit card information of the designated credit card in the storage unit 12, and checks the validity of the designated credit card on or after a date on which the number of days from the date to the date of use of the accommodation facility where the reservation is accepted becomes the number of credit days on the basis of the credit card information stored in the storage unit 12. If the credit card cannot be confirmed to be valid, the system control unit 14 outputs the settlement method change notice e-mail or the on-site settlement notice e-mail which indicates that the settlement method will be changed to a settlement method different from the settlement method that uses the designated credit card. Therefore, even when the number of days from today to the date of use exceeds the number of credit days, the accommodation facility reservation server 1 can confirm that the designated credit card is valid and accept the reservation. If the designated credit card becomes invalid after the reservation, the settlement method is changed, so that the accommodation facility reservation server 1 can maintain the reservation while keeping the safety of the settlement of the usage fee.

When the reservation where the number of days from today to the settlement date exceeds the number of credit days is requested, the system control unit 14 checks the validity of the designated credit card, and if the credit card can be confirmed to be valid, the system control unit 14 accepts the reservation, stores the reservation information including the credit card information of the designated credit card in the storage unit 12, and checks the validity of the designated credit card on or after a date on which the number of days from the date to the settlement date of the accommodation fee of the accommodation facility where the reservation is accepted becomes the number of credit days on the basis of the credit card information stored in the storage unit 12. Therefore, it is possible to improve the safety of the settlement of the usage fee.

After the system control unit 14 cannot confirm that the designated credit card is valid at the first credit re-check, the system control unit 14 checks the validity of the designated credit card on the basis of the credit card information stored in the storage unit 12, and if the credit card is confirmed to be valid, the system control unit 14 transmits the online card settlement notice e-mail indicating that the settlement method is a method that performs the settlement using the designated credit card. Therefore, even in a case in which the credit to settle the usage fee by the credit card which the user wants to use is lost once after the reservation, if the credit is restored thereafter, it is possible to use a settlement method that uses the credit card which the user wants to use.

When the number of days in which the accommodation facility where the reservation is accepted is used is greater than or equal to the number of credit days, the system control unit 14 checks the validity of the designated credit card after the online card settlement can be confirmed to be valid by the NG case credit re-check by the previous day of the check-in date of the accommodation facility where the reservation is accepted. It is possible to increase the number of days in which the accommodation facility is used and which is included in the credit period by the credit re-check just before check-in, even if the user cancels the reservation or the user does not show at the accommodation facility on the check-in date without any notice, so that it is possible to extend a period of suspension for the provider of the accommodation facility to determine whether or not to charge the cancellation fee.

When the number of days in which the accommodation facility where the reservation is accepted is used is greater than or equal to the number of credit days, the system control unit 14 checks the validity of the designated credit card on the basis of the credit card information stored in the storage unit 12 on or after a date on which the number of days from the date to the settlement date becomes the number of credit days after the designated credit card can be confirmed to be valid by the credit re-check just before check-in. If the designated credit card cannot be confirmed to be valid, the system control unit 14 outputs the on-site settlement notice e-mail. Therefore, it is possible to improve the safety of the payment of the usage fee.

When an optional fee is incurred by use of the reserved accommodation facility in addition to the accommodation fee for which the online card settlement can be confirmed to be valid by the NG case credit re-check, the system control unit 14 performs settlement of the usage fee including the accommodation fee and the optional fee that has been incurred by using the designated credit card on the basis of the credit card information stored in the storage unit 12. Therefore, if a new fee is incurred when the user uses the accommodation facility, the system control unit 14 can perform settlement by the credit card which the user wants to use without performing a procedure of the settlement.

If the system control unit 14 cannot confirm that the credit card is valid by the first credit re-check, the system control unit 14 determines whether or not the error type is the "over credit limit amount", and if the system control unit 14 determines that the error type is the "over credit limit amount", the system control unit 14 performs the NG case credit re-check. Therefore, it is possible to prevent the accommodation facility reservation server 1 from performing unnecessary NG case credit re-check.

The system control unit 14 stores the credit re-check history including the date of the first credit re-check and the credit re-check history including the date of the NG case credit re-check in the storage unit 12, estimates the date on which the designated credit card becomes valid on the basis of the credit re-check histories stored in the storage unit 12, and performs the NG case credit re-check on the estimated date. Therefore, so that it is possible to increase the probability that the credit for settling the accommodation fee is restored and thereby the credit card can be confirmed to be valid.

In the embodiment described above, the present invention is applied to offering an accommodation facility. However, the present invention can be applied to any service if the date of use of the service is determined when a reservation is made. Examples of such services include offering an athletic facility such as a golf course and transportation of people by a transportation facility such as an aircraft, a train, a ship, and a passenger vehicle.

### Reference Signs List

- 1: Accommodation facility reservation server
- 2: Settlement server
- 3: Accommodation facility terminal
- 4: User terminal
- 11: Communication unit
- 12: Storage unit
- 12a: Member information DB
- 12b: Accommodation facility information DB
- 12c: Reservation information DB
- 13: Input/output interface
- 14: System control unit
- 14a: CPU
- 14b: ROM
- 14c: RAM
- 15: System bus
- NW: Network
- S: Information processing system

## Claims

1. An information processing apparatus, comprising:
a first check means that checks validity of a designated credit card when a reservation where the number of days to a date of use of a service exceeds the number of credit days which correspond to a period where credit of settlement using the credit card is given is requested as a reservation where a usage fee is settled by the credit card on or after the date of use of the service;
a reservation means that, when the designated credit card can be confirmed to be valid by the first check means, accepts the reservation and stores information of the designated credit card in a storage means;
a second check means that checks the validity of the designated credit card, on the basis of the information stored in the storage means, on or after a date on which the number of days to the date of use of the service whose reservation is accepted by the reservation means is the number of the credit days; and
an output means that, when the designated credit card cannot be confirmed to be valid by the second check means, outputs information indicating that a settlement method is changed to a method different from a settlement method using the designated credit card.

2. The information processing apparatus according to claim 1, further comprising:
a third check means that checks the validity of the designated credit card on the basis of the information stored in the storage means after the designated credit card cannot be confirmed to be valid by the second check means,
wherein when the designated credit card can be confirmed to be valid by the third check means, the output means outputs information indicating that the settlement method is a method in which settlement is performed by the designated credit card.

3. The information processing apparatus according to claim 2, further comprising:
a settlement means that, when a fee is incurred by use of other than a reserved service from the usage fee that can be confirmed to be valid by the third check means, performs settlement of the usage fee including the fee that is incurred by the designated credit card on the basis of the information stored in the storage means.

4. The information processing apparatus according to claim 2 or 3, further comprising:
a fourth check means that, when the number of days of use of the service whose reservation is accepted by the reservation means is greater than or equal to the number of the credit days, after the designated credit card can be confirmed to be valid by the third check means, checks the validity of the designated credit card on the basis of the information stored in the storage means by the day before a date on which use of the service whose reservation is accepted is started,
wherein, when the designated credit card cannot be confirmed to be valid by the fourth check means, the output means outputs information indicating that the settlement method is changed to a method different from the settlement method using the designated credit card.

5. The information processing apparatus according to claim 4, further comprising:
a fifth check means that, after the designated credit card can be confirmed to be valid by the fourth check means, checks the validity of the designated credit card on the basis of the information stored in the storage means on or after a date on which the number of days to a settlement date of the usage fee is smaller than or equal to the number of the credit days,
wherein, when the designated credit card cannot be confirmed to be valid by the fifth check means, the output means outputs information indicating that the settlement method is changed to a method different from the settlement method using the designated credit card.

6. The information processing apparatus according to anyone of claims 2 to 5, further comprising:
a determination means that determines, when the designated credit card cannot be confirmed to be valid by the second check means, whether or not a reason why the designated credit card cannot be confirmed to be valid is because the usage fee exceeds available credit of the designated credit card,
wherein, when the determination means determines that the reason is because the usage fee exceeds available credit of the designated credit card, the third check means checks validity of the designated credit card.

7. The information processing apparatus according to any one of claims 2 to 6, further comprising:
a storage control means that stores a validity check date of the second check means and a validity check date of the third check means in a check date storage means; and
an estimation means that estimates a date on which the designated credit card becomes valid on the basis of the check dates stored in the check date storage means,
wherein the third check means checks validity of the designated credit card on a date estimated by the estimation means.

8. An information processing method executed by a computer, the information processing method comprising:
a first check step of checking validity of a designated credit card when a reservation where the number of days to a date of use of a service exceeds the number of credit days which correspond to a period where credit of settlement using the credit card is given is requested as a reservation where a usage fee is settled by the credit card on or after the date of use of the service;
a reservation step of, when the designated credit card can be confirmed to be valid in the first check step, accepting the reservation and storing information of the designated credit card in a storage means;
a second check step of checking the validity of the designated credit card, on the basis of the information stored in the storage means, on or after a date on which the number of days to the date of use of the service whose reservation is accepted in the reservation step is the number of the credit days; and
an output step of, when the designated credit card cannot be confirmed to be valid in the second check step, outputting information indicating that a settlement method is changed to a method different from a settlement method using the designated credit card.

9. An information processing program that causes a computer to function as:
a first check means that checks validity of a designated credit card when a reservation where the number of days to a date of use of a service exceeds the number of credit days which correspond to a period where credit of settlement using the credit card is given is requested as a reservation where a usage fee is settled by the credit card on or after the date of use of the service;
a reservation means that, when the designated credit card can be confirmed to be valid by the first check means, accepts the reservation and stores information of the designated credit card in a storage means;
a second check means that checks the validity of the designated credit card, on the basis of the information stored in the storage means, on or after a date on which the number of days to the date of use of the service whose reservation is accepted by the reservation means is the number of the credit days; and
an output means that, when the designated credit card cannot be confirmed to be valid by the second check means, outputs information indicating that a settlement method is changed to a method different from a settlement method using the designated credit card.

10. A recording medium that computer-readably stores an information processing program that causes a computer to function as:
a first check means that checks validity of a designated credit card when a reservation where the number of days to a date of use of a service exceeds the number of credit days which correspond to a period where credit of settlement using the credit card is given is requested as a reservation where a usage fee is settled by the credit card on or after the date of use of the service;
a reservation means that, when the designated credit card can be confirmed to be valid by the first check means, accepts the reservation and stores information of the designated credit card in a storage means;
a second check means that checks the validity of the designated credit card, on the basis of the information stored in the storage means, on or after a date on which the number of days to the date of use of the service whose reservation is accepted by the reservation means is the number of credit days; and
an output means that, when the designated credit card cannot be confirmed to be valid by the second check means, outputs information indicating that a settlement method is changed to a method different from a settlement method using the designated credit card.
